# EUROPÄISCHE PATENTSCHRIFT

(11) **EP 3 860 892 B1**
(45) Veröffentlichungstag und Bekanntmachung des Hinweises auf die Patenterteilung: **30.11.2022**
(21) Anmeldenummer: 19773811.5
(22) Anmeldetag: 23.09.2019
(51) Int. Cl.: B60T 8/36

(54) **ABS-DRUCKSTEUERVENTILANORDNUNG**
PRESSURE CONTROL VENTIL ARRANGEMENT FOR ABS
DISPOSITIF DE VALVES DE COMMANDE DE PRESSION POUR ABS

(30) Priorität: 01.10.2018 DE 102018124179
(43) Veröffentlichungstag der Anmeldung: 11.08.2021
(73) Patentinhaber: KNORR-BREMSE Systeme für Nutzfahrzeuge GmbH, 80809 München (DE)
(72) Erfinder: RÖTHER, Friedbert, 74389 Cleebronn (DE); WERNER, Kai, 71638 Ludwigsburg (DE); WIEDER, Gerhard, 74354 Besigheim (DE); JONKMANN, René, 70178 Stuttgart (DE); KRUMREY, Alexander, 71131 Oberjettingen (DE); MÄRKLE, Reiner, 74379 Ingersheim (DE)
(86) Internationale Anmeldenummer: PCT/EP2019/075502
(87) Internationale Veröffentlichungsnummer: WO 2020/069896

(56) Entgegenhaltungen:
- EP-A1- 0 352 522
- EP-A1- 2 303 653
- EP-A2- 0 147 585
- DE-A1- 4 447 305
- FR-A- 1 031 060

## Beschreibung

Die Erfindung betrifft eine ABS-Drucksteuerventilanordnung zur Steuerung des Fluiddrucks in einer druckmittelbetriebenen Bremsanlage eines Fahrzeugs mit Bremsschlupfregelung, durch welche bei einer Blockierneigung einzelner Räder des Fahrzeugs der Bremsdruck in druckmittelbetriebenen Bremsaktuatoren adaptiv angepasst wird, gemäß dem Oberbegriff von Anspruch 1, eine druckmittelbetriebene Bremsanlage eines Fahrzeugs mit Bremsschlupfregelung gemäß Anspruch 11, umfassend wenigstens eine solche ABS-Drucksteuerventilanordnung sowie ein Verfahren zur Herstellung einer solchen ABS-Drucksteuerventilanordnung gemäß den Ansprüchen 14 und 15.

Ein ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Bremsblockierneigung eines oder mehrerer Räder und berechnet daraus die Ansteuerung der auf den zugeordneten Bremszylinder einwirkenden ABS-Drucksteuerventilanordnung. Der Bremsdruck wird dann mittels der ABS-Drucksteuerventilanordnung durch Druckabbau, Druckhalten oder Druckaufbau nach Maßgabe des Radverhaltens und damit der Reibungsverhältnisse zwischen Reifen und Fahrbahn auf einen optimalen Schlupf eingestellt.

FR 1 031 060 A beschreibt ein Bremssteuerventil, bei welchem ein Schließorgan eines zwischen einer Verbindungsleitung und einem Reservoir angeordneten Speiseventils an einer Membran befestigt ist, auf deren nach der Schließrichtung des Schließorganes gekehrten Seite der in der Verbindungsleitung herrschende Steuerdruck und auf deren anderer Seite der Reservoir-Druck wirkt. EP 0 352 522 A1 offenbart ein Gleitschutzventil für druckluftgebremste Fahrzeuge, das in eine Verbindung von einer Bremsdruckquelle zu wenigstens einem Bremszylinder angeordnet ist und welches ein Absperrventil und ein Entlüftungsventil aufweist, die beide von je einem Kolben- bzw. Membranglied schaltbar sind, wobei die Kolben- bzw. Membranglieder von durch Vorsteuerventile gesteuerten Schaltdrücken beaufschlagbar sind. EP 0 147 585 A2 beschreibt ein Gleitschutzventil für druckluftgebremste Fahrzeuge, mit einem in eine Verbindung von einer Bremsdruckquelle zu wenigstens einem Bremszylinder angeordneten Membranabsperrventil, das von einem Kolben- oder Membranglied schaltbar ist, welches in Ventilschließrichtung wirkend vom durch ein Vorsteuerventil überwacht zuführbaren Druck der Bremsdruckquelle und der Kraft einer Feder und andererseits, in Ventilöffnungsrichtung wirkend, ständig vom Druck der Bremsdruckquelle beaufschlagt ist. Eine gattungsgemäße ABS-Drucksteuerventilanordnung ist aus EP2303653B1 bekannt. Dort sind die beiden Membranventile parallel und koplanar angeordnet.

Der Erfindung liegt die Aufgabe zugrunde, eine ABS-Drucksteuerventilanordnung der eingangserwähnten Art derart weiter zu bilden, dass sie kompakter baut. Gleichzeitig soll ein entsprechendes Verfahren zur Herstellung einer solchen ABS-Drucksteuerventilanordnung angegeben werden. Schließlich soll auch eine druckmittelbetriebene Bremsanlage eines Fahrzeugs mit Bremsschlupfregelung angegeben werden, umfassend eine solche ABS-Drucksteuerventilanordnung.

Diese Aufgabe wird erfindungsgemäß durch die Merkmale der Ansprüche 1, 11, 14 und 15 gelöst.

Die Erfindung geht aus von einer ABS-Drucksteuerventilanordnung zur Steuerung des Fluiddrucks in einer druckmittelbetriebenen Bremsanlage eines Fahrzeugs mit Bremsschlupfregelung, durch welche bei einer Blockierneigung einzelner Räder des Fahrzeugs der Bremsdruck in druckmittelbetriebenen Bremsaktuatoren adaptiv angepasst wird, beinhaltend wenigstens:
a) ein Gehäuse, welches wenigstens zwei Gehäuseteile aufweist, nämlich ein erstes Gehäuseteil und ein zweites Gehäuseteil,
b) zwei durch Federelemente belastete Membrane aufweisende Membranventile, nämlich ein Einlass-Membranventil mit einer Einlass-Membrane und ein Auslass-Membranventil mit einer Auslass-Membrane,
c) einen elektrischen Signaleingangsanschluss zum Einsteuern von elektrischen Steuersignalen einer elektronischen Steuereinrichtung,
d) von der elektronischen Steuereinrichtung ansteuerbare Magnetventile zum Vorsteuern der Membranventile mittels je eines Steuerdrucks, nämlich ein Halte-Magnetventil, welches das Einlass-Membranventil durch einen ersten Vorsteuerdruck vorsteuert und ein Auslass-Magnetventil, welches das Auslass-Membranventil durch einen zweiten Vorsteuerdruck vorsteuert,
e) einen Druckentlastungsanschluss, welcher mit einer Drucksenke in Verbindung steht,
f) einen Druckausgangsanschluss zum Anschluss wenigstens eines druckmittelbetriebenen Bremsaktuators,
g) einen Druckeingangsanschluss zum Anschluss einer Einrichtung, welche einen Bremsdruck erzeugt,
h) eine Zwischenplatte, welche zwischen den beiden Gehäuseteilen angeordnet ist, wobei
i) sich die Federelemente (einerseits an der Zwischenplatte und andererseits an den Membranen abstützen, wobei
j) in einer ersten Schließstellung die Einlass-Membrane mittels wenigstens eines ersten Federelements gegen einen ersten Membran-Ventilsitz und in einer zweiten Schließstellung die Auslass-Membrane mittels wenigstens eines zweiten Federelements gegen einen zweiten Membran-Ventilsitz dichtend gedrängt ist,
k) in einer ersten Abhebestellung die Einlass-Membrane vom ersten Membran-Ventilsitz abgehoben ist, wodurch der Druckeingangsanschluss mit dem Druckausgangsanschluss verbunden ist, und in einer zweiten Abhebestellung die Auslass-Membrane vom zweiten Membran-Ventilsitz abgehoben ist, wodurch der Druckausgangsanschluss mit dem Druckentlastungsanschluss verbunden ist,
l) ein Außenrand der Einlass-Membrane zwischen dem ersten Gehäuseteil und der Zwischenplatte geklemmt ist, und wobei
m) in dem ersten Gehäuseteil der erste Membran-Ventilsitz ausgebildet ist.

Die Erfindung basiert dann auf dem Gedanken, dass
n) ein Außenrand der Auslass-Membrane zwischen dem zweiten Gehäuseteil und der Zwischenplatte geklemmt ist,
o) in dem zweiten Gehäuseteil der zweite Membranventilsitz ausgebildet ist,
p) in der Zwischenplatte wenigstens ein Teil einer Einlass-Steuerkammer ausgebildet ist, welche von der Einlass-Membrane begrenzt ist und in welche das Halte-Magnetventil den ersten Vorsteuerdruck einsteuert,
q) in der Zwischenplatte wenigstens ein Teil einer Auslass-Steuerkammer ausgebildet ist, welche von der Auslass-Membrane begrenzt ist und in welche das Auslass-Magnetventil den zweiten Vorsteuerdruck einsteuert, wobei
r) in der Zwischenplatte wenigstens ein Teil eines ersten Steuerkanals ausgebildet ist, welcher das Halte-Magnetventil mit der Einlass-Steuerkammer verbindet,
s) in der Zwischenplatte wenigstens ein Teil eines zweiten Steuerkanals ausgebildet ist, welcher das Auslass-Magnetventil mit der Auslass-Steuerkammer verbindet,
t) eine erste Bewegung der Einlass-Membrane von der ersten Schließstellung in die erste Abhebestellung und eine zweite Bewegung der Auslass-Membrane von der zweiten Schließstellung in die zweite Abhebestellung zueinander einander entgegen und in Richtung Zwischenplatte gerichtet sind.

Insbesondere sind die Einlass-Membrane und die Auslass-Membrane koaxial angeordnet.

Dadurch wird eine Sandwich-Bauweise realisiert, weil die Zwischenplatte der ersten Gehäuseteil und dem zweiten Gehäuseteil insbesondere direkt zwischengeordnet ist. Insbesondere ist die Zwischenplatte zwischen dem ersten Gehäuseteil und dem zweiten Gehäuseteil geklemmt. Weiterhin werden die Steuerdrücke durch die Zwischenplatte geführt und das Arbeitsfluid in Form des am Druckeingangsanschluss anstehenden Drucks oder des am Druckausgangsanschluss anstehenden Drucks an den beiden Membranen vorbeigeführt.

Dadurch kann die ABS-Drucksteuerventilanordnung schmäler bauen, insbesondere auch wenn die Einlass-Membrane und die Auslass-Membrane koaxial angeordnet sind. Durch die Zwischenplatte können auch zwei Deckel entfallen, welche Öffnungen deckeln, in welche Membrane eingesetzt werden. Durch die Anordnung wird eine Montierbarkeit der ABS-Drucksteuerventilanordnung von einer Seite, insbesondere von oben her möglich, was sich besonders für eine automatisierte Montage eignet.

Der Aufbau der erfindungsgemäßen ABS-Drucksteuerventilanordnung ermöglicht außerdem eine verkürzte Druckmittelführung, wobei insbesondere der Arbeitsstrom nicht oder nur unwesentlich umgelenkt wird. Nicht zuletzt wird eine Einsparung an Material in verschiedenen Teilen der ABS-Drucksteuerventilanordnung möglich.

Durch die in den Unteransprüchen aufgeführten Maßnahmen sind vorteilhafte Weiterbildungen und Verbesserungen der in Anspruch 1 angegebenen Erfindung möglich.

Insbesondere kann vorgesehen sein, dass
a) Ein erster Teil einer von der Einlass-Steuerkammer abgewandten ersten Fläche der Einlass-Membrane von dem am Druckeingangsanschluss herrschenden Druck und ein zweiter Teil dieser ersten Fläche von dem am Druckausgangsanschluss herrschenden Druck belastet ist, und dass
b) Ein erster Teil der von der Auslass-Steuerkammer abgewandten zweiten Fläche der Auslass-Membrane von dem am Druckentlastungsanschluss herrschenden Druck und ein zweiter Teil dieser zweiten Fläche von dem am Druckausgangsanschluss herrschenden Druck belastet ist.

Gemäß einer Weiterbildung kann vorgesehen sein, dass
a) der erste Teil der ersten Fläche größer als der zweite Teil der ersten Fläche ist, und dass
b) der erste Teil der zweiten Fläche größer als der zweite Teil der zweiten Fläche ist.

Bevorzugt kann vorgesehen sein, dass
a) eine zur Einlass-Steuerkammer gewandte erste mit dem ersten Membranventilsitz zusammen wirkenden Steuerfläche der Einlass-Membrane größer ist als die Summe aus dem ersten Teil und dem zweiten Teil der ersten Fläche, und dass
b) eine zur Auslass-Steuerkammer gewandte zweite mit dem zweiten Membranventilsitz zusammenwirkende Steuerfläche der Auslass-Membrane größer ist als die Summe aus dem ersten Teil und dem zweiten Teil der zweiten Fläche.

Gemäß einer weiterbildenden Maßnahme kann vorgesehen sein, dass
a) in der ersten Abhebestellung der Einlass-Membrane der Druckeingangsanschluss mit dem Druckausgangsanschluss verbunden und in der der ersten Schließstellung der Einlass-Membrane diese Verbindung unterbrochen ist, und dass
b) in der zweiten Abhebestellung der Auslass-Membrane der Druckausgangsanschluss mit dem Druckentlastungsanschluss verbunden und in der der zweiten Schließstellung der Auslass-Membrane diese Verbindung unterbrochen ist.

Bevorzugt kann auch vorgesehen sein, dass
a) das Halte-Magnetventil durch ein erstes 3/2-Wege-Magnetventil gebildet wird, wobei sein erster Anschluss mit dem Druckeingangsanschluss, sein zweiter Anschluss mit dem ersten Steuerkanal und sein dritter Anschluss mit dem Druckentlastungsanschluss verbunden ist, und
b) das Auslass-Magnetventil durch ein zweites 3/2-Wege-Magnetventil gebildet wird, wobei sein erster Anschluss mit dem Druckeingangsanschluss, sein zweiter Anschluss mit dem zweiten Steuerkanal und sein dritter Anschluss mit dem Druckentlastungsanschluss verbunden ist.

Dabei kann das erste 3/2-Wege-Magnetventil (Halte-Magnetventil) derart ausgebildet sein, dass es unbestromt seinen zweiten Anschluss mit seinem dritten Anschluss verbindet und den ersten Anschluss sperrt. Weiterhin derart, dass es bestromt seinen ersten Anschluss mit dem zweiten Anschluss verbindet und den dritten Anschluss sperrt.

Weiterhin kann das zweite 3/2-Wege-Magnetventil (Auslass-Magnetventil) derart ausgebildet sein, dass es unbestromt seinen ersten Anschluss mit seinem zweiten Anschluss verbindet und den dritten Anschluss sperrt. Weiterhin derart, dass es bestromt seinen zweiten Anschluss mit dem dritten Anschluss verbindet und den ersten Anschluss sperrt.

Insbesondere können der Halte-Magnetventil mit dem Einlass-Membranventil und das Auslass-Magnetventil mit dem Auslass-Membranventil auf der Basis von am Signaleingangsanschluss anstehenden Steuersignal derart zusammenwirken, dass
a) auf ein den Zustand "Druckaufbau" repräsentierendes und am Signaleingangsanschluss anstehendes Signal hin das Halte-Magnetventil seinen zweiten Anschluss mit seinem dritten Anschluss verbindet und seinen ersten Anschluss sperrt und das Auslass-Magnetventil seinen ersten Anschluss mit seinem zweiten Anschluss verbindet und seinen dritten Anschluss sperrt,
b) auf ein den Zustand "Druckhalten" repräsentierendes und am Signaleingangsanschluss anstehendes Signal hin das Halte-Magnetventil seinen ersten Anschluss mit seinem zweiten Anschluss verbindet und seinen dritten Anschluss sperrt und das Auslass-Magnetventil seinen ersten Anschluss mit seinem zweiten Anschluss verbindet und seinen dritten Anschluss sperrt,
c) auf ein den Zustand "Druckabbau" repräsentierendes und am Signaleingangsanschluss anstehendes Signal hin das Halte-Magnetventil seinen ersten Anschluss mit seinem zweiten Anschluss verbindet und seinen dritten Anschluss sperrt und das Auslass-Magnetventil seinen zweiten Anschluss mit seinem dritten Anschluss verbindet und seinen ersten Anschluss sperrt.

Insbesondere können die Zustände "Druckaufbau", Druckhalten" und "Druckabbau" durch pulsartiges Aktivieren (Bestromen)/Deaktivieren (Entstromen) der Magnetventile abwechselnd hervorgerufen werden.

Gemäß einer Weiterbildung können zwischen dem ersten Gehäuseteil und der Zwischenplatte und dem zweiten Gehäuseteil und der Zwischenplatte jeweils Dichtungen angeordnet sein, um Steuerkammern und Strömungswege gegeneinander und gegenüber der Atmosphäre abzudichten.

Insbesondere kann auch ein Ventilblock als Baueinheit vorgesehen sein, welcher das Halte-Magnetventil und das Auslass-Magnetventil umfasst. Der Ventilblock kann insbesondere zwischen dem ersten Gehäuseteil und dem zweiten Gehäuseteil verspannt sein.

Insbesondere können auch Spannmittel vorgesehen sein, welche das erste Gehäuseteil mit dem zweiten Gehäuseteil unter Zwischenordnung der Zwischenplatte und des Ventilblocks zusammenspannen.

Die Erfindung betrifft auch eine druckmittelbetriebene Bremsanlage eines Fahrzeugs mit Bremsschlupfregelung, insbesondere elektro-pneumatische Bremsanlage mit Bremsschlupfregelung, umfassend wenigstens eine oben beschriebene ABS-Drucksteuerventilanordnung.

Dabei kann die Einrichtung, welche einen Bremsdruck erzeugt, durch ein pneumatisches Fußbremsventil oder durch ein elektro-pneumatisches Druckregelmodul gebildet werden.

Im Falle eines Fußbremsventils bildet daher der in dem entsprechenden pneumatischen Kanal wirkende Steuerdruck als Arbeitsdruck und wird dann von der ABS-Drucksteuerventilanordnung auf das durch eine bestimmte Betätigung des Fußbremsventils vorgegebene Soll-Niveau erhöht (Druckaufbau), auf einem bestimmten Niveau gehalten (Druckhalten) oder auf ein bestimmtes Niveau unterhalb des Soll-Niveaus abgesenkt (Druckabbau).

Im Falle eines Druckregelmoduls einer EBS-Bremsanlage ist die ABS-Drucksteuerventilanordnung zwischen das Druckregelmodul und den Bremsaktuator geschaltet. Dabei bildet der Ausgangsdruck des Druckregelmoduls den Arbeitsdruck, welcher abhängig von elektrischen Signalen in dem Druckregelmodul in einem closed loop geregelt wird. Die ABS-Regelroutinen können dann beispielsweise in einem lokalen elektronischen Steuergerät des Druckregelmoduls implementiert sein.

Insbesondere kann die elektronische Steuereinrichtung durch ein ABS-Steuergerät oder durch ein Steuergerät gebildet wird, in welchem ABS-Routinen implementiert sind.

Die Erfindung betrifft auch ein Verfahren zur Herstellung einer oben beschriebenen ABS-Drucksteuerventilanordnung gemäß einem ersten Aspekt, welches durch wenigstens folgende aufeinander folgende Schritte gekennzeichnet ist:
a) Fertigen des ersten Gehäuseteils, des zweiten Gehäuseteils, der Zwischenplatte, des ersten und zweiten Federelements und eines Ventilblocks, welcher das Halte-Magnetventil und das Auslass-Magnetventil umfasst oder integriert, und
b) Spannen des zweiten Gehäuseteils in einer Einspannvorrichtung und Positionieren der Auslass-Membrane samt zweitem Federelement und des Ventilblocks an dem zweiten Gehäuseteil,
c) Positionieren der Zwischenplatte auf dem zweiten Gehäuseteil,
d) Positionieren der Einlass-Membrane samt erstem Federelement auf der Zwischenplatte,
e) Positionieren des ersten Gehäuseteils auf der Zwischenplatte, und
f) Verspannen des ersten Gehäuseteils mit dem zweiten Gehäuseteil.

Die Erfindung betrifft auch ein Verfahren zur Herstellung einer oben beschriebenen ABS-Drucksteuerventilanordnung, welches durch wenigstens folgende aufeinander folgende Schritte gekennzeichnet ist:
a) Fertigen des ersten Gehäuseteils, des zweiten Gehäuseteils, der Zwischenplatte, des ersten und zweiten Federelements und eines Ventilblocks, welcher das Halte-Magnetventil und das Auslass-Magnetventil umfasst oder integriert, und
b) Spannen des ersten Gehäuseteils in einer Einspannvorrichtung und Positionieren der Einlass-Membrane samt erstem Federelement und des Ventilblocks an dem ersten Gehäuseteil,
c) Positionieren der Zwischenplatte auf dem ersten Gehäuseteil,
d) Positionieren der Auslass-Membrane samt zweitem Federelement auf der Zwischenplatte,
e) Positionieren des zweiten Gehäuseteils auf der Zwischenplatte, und
f) Verspannen des ersten Gehäuseteils mit dem zweiten Gehäuseteil.

In diesen beiden Fällen wird daher die ABS-Drucksteuerventilanordnung von "unten nach oben" schichtweise montiert, je nachdem mit welchem Gehäuseteil begonnen wird.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer bremsschlupfgeregelten elektro-pneumatischen Betriebsbremseinrichtung als bevorzugte Ausführungsform einer bremsschlupfgeregelten Betriebsbremseinrichtung mit vier ABS-Drucksteuerventilanordnungen gemäß einer bevorzugten Ausführungsform;
- Fig. 2: eine Querschnittsdarstellung einer ABS-Drucksteuerventilanordnung gemäß einer bevorzugten Ausführungsform im Zustand "Druckaufbau", wobei ein Teil des Querschnitts in einer ersten Ebene dargestellt ist, in welcher der Schaltzustand des Halte-Magnetventils sichtbar ist;
- Fig. 3: eine Querschnittsdarstellung der ABS-Drucksteuerventilanordnung von Fig.2 im Zustand "Druckaufbau", wobei ein Teil des Querschnitts in einer zweiten Ebene dargestellt ist, in welcher der Schaltzustand des Auslass-Magnetventils sichtbar ist;
- Fig. 4: eine Querschnittsdarstellung der ABS-Drucksteuerventilanordnung von Fig.2 im Zustand "Druckhalten", wobei ein Teil des Querschnitts in der ersten Ebene dargestellt ist, in welcher der Schaltzustand des Halte-Magnetventils sichtbar ist;
- Fig. 5: eine Querschnittsdarstellung der ABS-Drucksteuerventilanordnung von Fig.1 im Zustand "Druckhalten", wobei ein Teil des Querschnitts in der zweiten Ebene dargestellt ist, in welcher der Schaltzustand des Auslass-Magnetventils sichtbar ist;
- Fig. 6: eine Querschnittsdarstellung der ABS-Drucksteuerventilanordnung von Fig.1 im Zustand "Druckabbau", wobei ein Teil des Querschnitts in der ersten Ebene dargestellt ist, in welcher der Schaltzustand des Halte-Magnetventils sichtbar ist;
- Fig. 7: eine Querschnittsdarstellung der ABS-Drucksteuerventilanordnung von Fig.1 im Zustand "Druckabbau", wobei ein Teil des Querschnitts in der zweiten Ebene dargestellt ist, in welcher der Schaltzustand des Auslass-Magnetventils sichtbar ist.

### Beschreibung des Ausführungsbeispiels

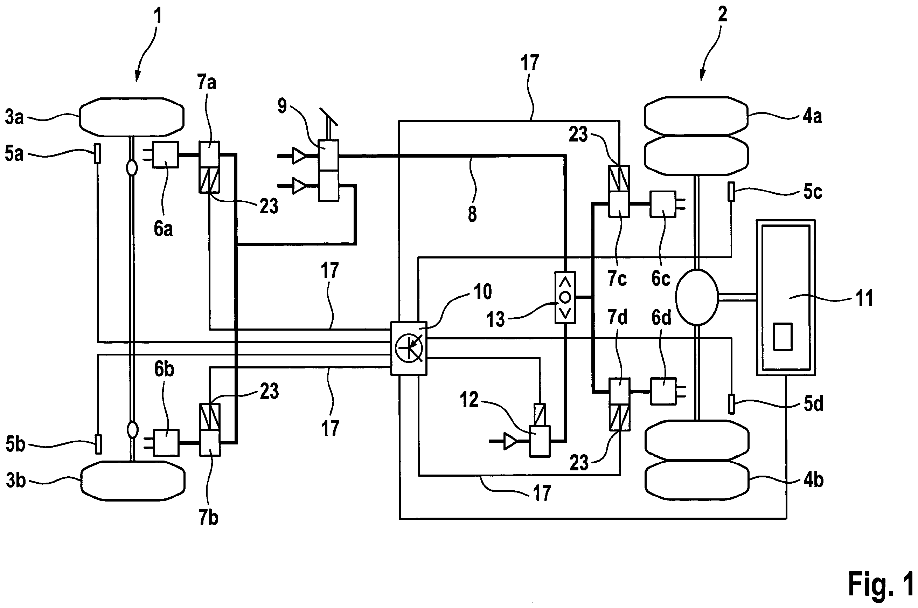

Gemäß **Fig. 1** weist ein mit einer bremsschlupfgeregelten hier beispielsweise elektro-pneumatischen Betriebsbremseinrichtung ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende elektro-pneumatische Betriebsbremseinrichtung ist hier nach Art einer 4S/4K-Anlage (vier Sensoren, vier Kanäle) ausgebildet. Dies bedeutet, dass hier insgesamt vier Drehzahlsensoren 5a-5d sowie vier ABS-Drucksteuerventilanordnungen 7a-7d zur Verfügung stehen. Die ABS-Drucksteuerventilanordnungen 7a-7d dienen der Ansteuerung von jeweils zugeordneten pneumatischen Bremszylindern 6a-6d. Über eine sich verzweigende pneumatische Bremsdruckleitung 8 stehen alle Drucksteuerventilanordnungen 7a-7d mit einem Fußbremsventil 9 in Verbindung. Die Drucksteuerventilanordnungen 7a-7d bestehen im Wesentlichen aus zwei integrierten Membranventilen 14a und 14b und zwei diese ansteuernden, federbelasteten Magnetventilen 15a, 15b. Die Membranventile 14a und 14b, nämlich ein Einlass-Membranventil 14a und ein Auslass-Membranventil 14b, sind jeweils durch Federelemente 16a, 16b in Schließrichtung belastet und werden über die jeweils zugeordneten Magnetventile 15a und 15b, nämlich ein Halte-Magnetventil 15a und ein Auslass-Magnetventil 15b vorgesteuert.

Der Fahrer erzeugt bei Betätigung des Fußbremsventils 9 einen Bremsdruck, der über die pneumatische Bremsdruckleitung 8 die ABS-Drucksteuerventilanordnungen 7a-7d passierend an die den Rädern 3a,3b sowie den Rädern 4a,4b zugeordneten Bremszylindern 6a-6d weitergeleitet wird.

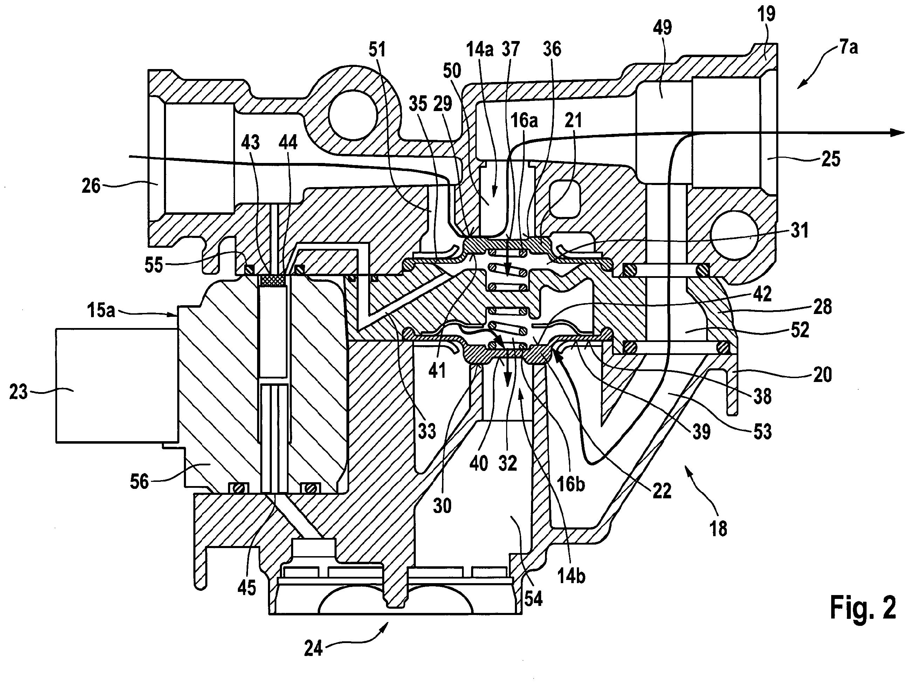

Die ABS-Drucksteuerventilanordnungen 7a-7d sind über die integrierten, in **Figuren 2** bis **7** gezeigten Magnetventile 15a, 15b ansteuerbar und sind zu diesem Zwecke mit einer zentralen elektronischen Steuereinheit 10 über Signalleitungen 17 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a, 3b bzw. 4a, 4b wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit beeinflusst, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die im Rahmen der ABS-Regelung eingesetzten ABS-Drucksteuerventilanordnungen 7a bis 7d sind hier nach Art einer 1-Kanal-Drucksteuerventilanordnung aufgebaut, wobei die ABS-Drucksteuerventilanordnung 7a exemplarisch für die weiteren ABS-Drucksteuerventilanordnungen 7b bis 7d und in den **Figuren 2** bis **7** separat dargestellt ist. Die weiteren ABS-Drucksteuerventilanordnung 7b bis 7d sind in analoger Weise aufgebaut. Insofern gilt die nachfolgende Beschreibung auch für diese ABS-Drucksteuerventilanordnungen 7b bis 7d.

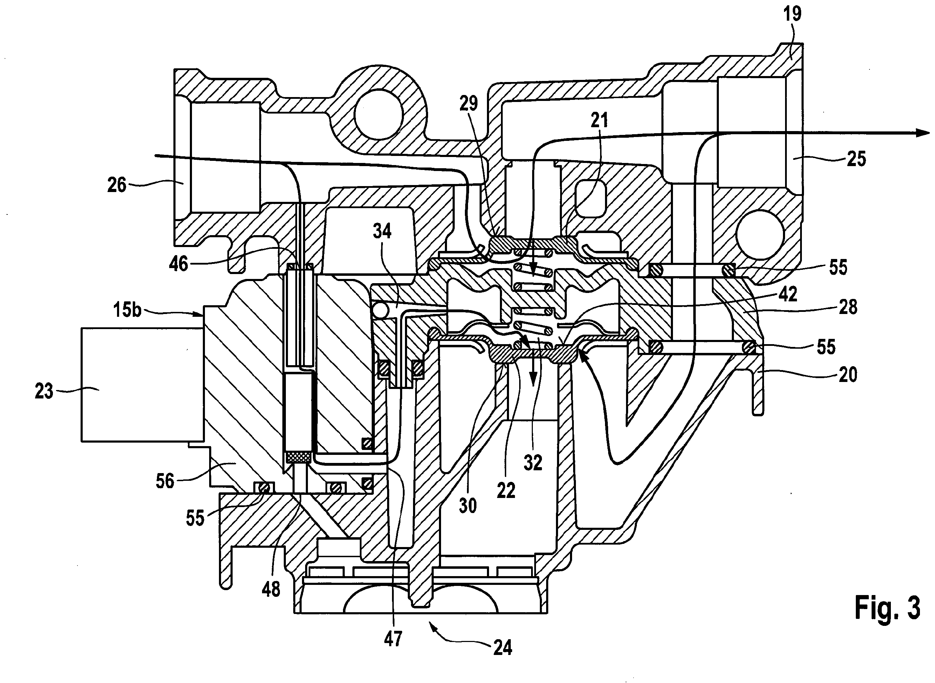

Der das Halte-Magnetventil 15a betreffende Teil des in **Fig. 2** dargestellten Querschnitts ist in einer ersten Ebene dargestellt, in welcher das Halte-Magnetventil 15a sichtbar ist. Hingegen ist in **Fig. 3** der das Auslass-Magnetventil 15b betreffende Teil des in **Fig. 2** dargestellten Querschnitts in einer zweiten Ebene dargestellt, in welcher das Auslass-Magnetventil 15b sichtbar ist, wobei die erste Ebene und die zweite Ebene parallel zueinander und in Bezug auf die Zeichenebene versetzt sind. In den **Figuren 2** bis **7** ist die ABS-Drucksteuerventilanordnung 7a außerdem in einer Lage dargestellt, in welcher die rechte Seite in einer Montagestellung unten und die linke Seite in der Montagestellung oben angeordnet ist. Dies wird im Hinblick auf das später noch beschriebene Verfahren zur Herstellung der ABS-Drucksteuerventilanordnung 7a erwähnt.

Die ABS-Drucksteuerventilanordnung 7a beinhaltet ein Gehäuse 18, welches hier beispielsweise zwei Gehäuseteile aufweist, ein erstes Gehäuseteil 19 und ein zweites Gehäuseteil 20, zwei durch Federelemente 16a, 16b belastete Membrane aufweisende Membranventile, nämlich das Einlass-Membranventil 14a mit einer Einlass-Membrane 21 und ein Auslass-Membranventil 14b mit einer Auslass-Membrane 22, einen elektrischen Signaleingangsanschluss 23 zum Einsteuern von in der betreffenden elektrischen Signalleitung 17 geführten elektrischen Steuersignalen der elektronischen Steuereinrichtung 10, von der elektronischen Steuereinrichtung 10 ansteuerbare Magnetventile zum Vorsteuern der Membranventile 14a, 14b mittels je eines Steuerdrucks, nämlich das Halte-Magnetventil 15a (**Fig. 2**), welches das Einlass-Membranventil 14a durch einen ersten Vorsteuerdruck vorsteuert und das Auslass-Magnetventil 15b (**Fig. 3**), welches das Auslass-Membranventil 14b durch einen zweiten Vorsteuerdruck vorsteuert, einen Druckentlastungsanschluss 24, welcher mit der Atmosphäre in Verbindung steht, einen Druckausgangsanschluss 25 zum Anschluss des Bremszylinders 6a, einen Druckeingangsanschluss 26 zum Anschluss der vom Fußbremsventil 9 gezogenen Bremsdruckleitung 8, eine Zwischenplatte 28, welche zwischen den beiden Gehäuseteilen 19, 20 angeordnet ist. Die Federelemente 16a, 16b stützen sich einerseits an der Zwischenplatte 28 und andererseits an den Membranen 21, 22 ab. Insbesondere sind die Einlass-Membrane 21 und die Auslass-Membrane 22 koaxial angeordnet.

Die Einlass-Membrane 21 ist in einer ersten Schließstellung mittels eines ersten Federelements 16a gegen einen ersten Membran-Ventilsitz 29 und die Auslass-Membrane 22 in einer zweiten Schließstellung mittels eines zweiten Federelements 16b gegen einen zweiten Membran-Ventilsitz 30 dichtend gedrängt. Hingegen ist die Einlass-Membrane 21 in einer ersten Abhebestellung vom ersten Membran-Ventilsitz 29 abgehoben, wodurch der Druckeingangsanschluss 26 mit dem Druckausgangsanschluss 25 verbunden ist (wird). Der erste Membran-Ventilsitz 29 ist in dem ersten Gehäuseteil 19 ausgebildet. Die Auslass-Membrane 22 ist in einer zweiten Abhebestellung vom zweiten Membran-Ventilsitz 30 abgehoben, wodurch der Druckausgangsanschluss 25 mit dem Druckentlastungsanschluss 24 verbunden ist (wird).

Ein Außenrand der Einlass-Membrane 21 ist zwischen dem ersten Gehäuseteil 19 und der Zwischenplatte 28 geklemmt, während ein Außenrand der Auslass-Membrane 22 zwischen dem zweiten Gehäuseteil 20 und der Zwischenplatte 28 geklemmt ist und in dem zweiten Gehäuseteil 20 der zweite Membranventilsitz 30 ausgebildet ist.

In der Zwischenplatte 28 ist eine Einlass-Steuerkammer 31 ausgebildet, welche von der Einlass-Membrane 21 begrenzt ist und in welche das Halte-Magnetventil 15a den ersten Vorsteuerdruck einsteuert (**Fig. 2**). Weiterhin ist in der Zwischenplatte 28 eine Auslass-Steuerkammer 32 ausgebildet, welche von der Auslass-Membrane 22 begrenzt ist und in welche das Auslass-Magnetventil 15b den zweiten Vorsteuerdruck einsteuert (**Fig. 3**).

In der Zwischenplatte 28 sind außerdem ein Teil eines ersten Steuerkanals 33 ausgebildet, welcher das Halte-Magnetventil 15a mit der Einlass-Steuerkammer 31 verbindet (**Fig. 2**), sowie ein Teil eines zweiten Steuerkanals 34, welcher das Auslass-Magnetventil 15b mit der Auslass-Steuerkammer 32 verbindet (**Fig. 3**).

Wie anhand von **Fig. 2** und **Fig. 3** leicht vorstellbar ist, sind eine erste Bewegung der Einlass-Membrane 21 von der ersten Schließstellung in die erste Abhebestellung und eine zweite Bewegung der Auslass-Membrane 22 von der zweiten Schließstellung in die zweite Abhebestellung einander entgegen und in Richtung Zwischenplatte 28 und jeweils von den beiden Gehäuseteilen 19, 20 weg gerichtet.

Insbesondere ist ein erster Teil 35 einer von der Einlass-Steuerkammer 31 abgewandten ersten Fläche 36 der Einlass-Membrane 31 von dem am Druckeingangsanschluss 26 herrschenden Druck und ein zweiter Teil 37 dieser ersten Fläche 36 von dem am Druckausgangsanschluss 25 herrschenden Druck belastet.

Weiterhin ist beispielsweise ein erster Teil 38 einer von der Auslass-Steuerkammer 32 abgewandten zweiten Fläche 39 der Auslass-Membrane 22 von dem am Druckentlastungsanschluss 24 herrschenden Druck und ein zweiter Teil 40 dieser zweiten Fläche 39 von dem am Druckausgangsanschluss 25 herrschenden Druck belastet.

Bevorzugt ist der erste Teil 35 der ersten Fläche 36 größer als der zweite Teil 37 der ersten Fläche, und der erste Teil 38 der zweiten Fläche 39 größer als der zweite Teil 40 der zweiten Fläche 39.

Bevorzugt ist auch vorgesehen, dass eine zur Einlass-Steuerkammer 31 gewandte erste, mit dem ersten Membranventilsitz 29 zusammen wirkende Steuerfläche 41 der Einlass-Membrane 21 größer ist als die Summe aus dem ersten Teil 35 und dem zweiten Teil 37 der ersten Fläche 36, und dass eine zur Auslass-Steuerkammer 32 gewandte zweite, mit dem zweiten Membranventilsitz 30 zusammen wirkende Steuerfläche 42 der Auslass-Membrane 22 größer als die Summe aus dem ersten Teil 38 und dem zweiten Teil 40 der zweiten Fläche 39 ist.

Wie insbesondere anhand der Pfeile in **Fig. 2** und in **Fig. 3** vorstellbar ist, wird in der ersten Abhebestellung der Einlass-Membrane 21 der Druckeingangsanschluss 26 mit dem Druckausgangsanschluss 25 verbunden und in der ersten Schließstellung der Auslass-Membrane 22 diese Verbindung unterbrochen.

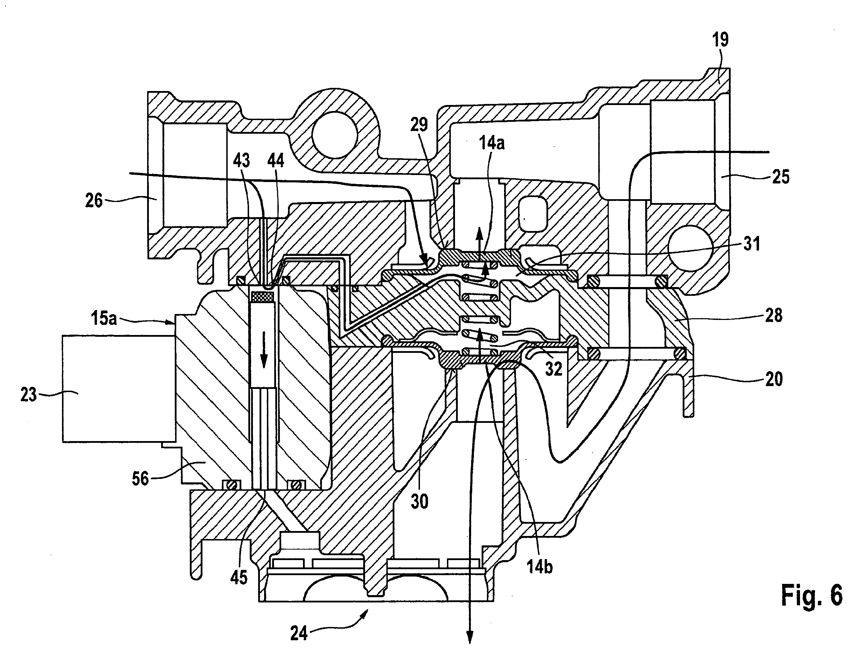

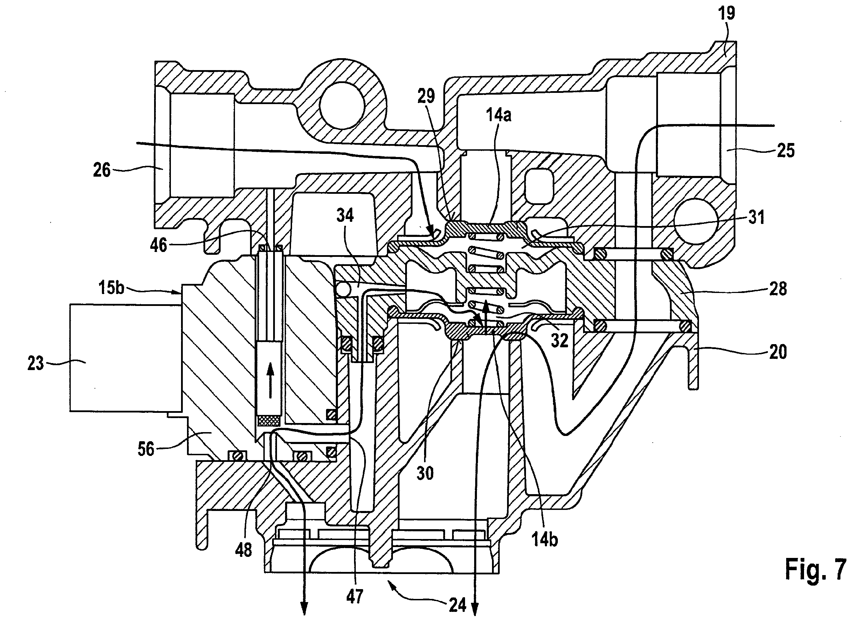

Wie insbesondere anhand der Pfeile in **Fig. 6** und in **Fig. 7** vorstellbar ist, wird in der zweiten Abhebestellung der Auslass-Membrane 22 der Druckausgangsanschluss 25 mit dem Druckentlastungsanschluss 24 verbunden und in der der zweiten Schließstellung diese Verbindung unterbrochen.

Bevorzugt ist vorgesehen, dass das Halte-Magnetventil 15a durch ein erstes 3/2-Wege-Magnetventil gebildet wird, wobei sein erster Anschluss 43 mit dem Druckeingangsanschlus 26s, sein zweiter Anschluss 44 mit dem ersten Steuerkanal 33 und sein dritter Anschluss 45 mit dem Druckentlastungsanschluss 24 verbunden ist (**Fig. 2**). Insbesondere ist das erste 3/2-Wege-Magnetventil (Halte-Magnetventil) 15a derart ausgebildet, dass es unbestromt seinen zweiten Anschluss 44 mit seinem dritten Anschluss 45 verbindet und den ersten Anschluss 43 sperrt, weiterhin derart, dass es bestromt seinen ersten Anschluss 43 mit seinem zweiten Anschluss 44 verbindet und den dritten Anschluss 45 sperrt.

Auch das Auslass-Magnetventil 15b wird bevorzugt durch ein zweites 3/2-Wege-Magnetventil gebildet, wobei sein erster Anschluss 46 mit dem Druckeingangsanschluss 26, sein zweiter Anschluss 47 mit dem zweiten Steuerkanal 34 und sein dritter Anschluss 48 mit dem Druckentlastungsanschluss 24 verbunden ist (**Fig. 3**). Weiterhin ist das zweite 3/2-Wege-Magnetventil 15b (Auslass-Magnetventil) bevorzugt derart ausgebildet, dass es unbestromt seinen ersten Anschluss 46 mit seinem zweiten Anschluss 47 verbindet und den dritten Anschluss 48 sperrt, weiterhin derart, dass es bestromt seinen zweiten Anschluss 47 mit dem dritten Anschluss 48 verbindet und den ersten Anschluss 46 sperrt.

Wie insbesondere **Fig. 2** zeigt, ist in dem ersten Gehäuseteil 19 ein erster Kanal 49i ausgebildet, welcher den Druckausgangsanschluss 25 mit einer ersten Kammer 50 verbindet, welcher durch den zweiten Teil 37 der ersten Fläche 36 der Einlass-Membrane 21 begrenzt wird. Die erste Kammer 50 wird von einer ersten Ringkammer 51 umschlossen, welche mit dem Druckeingangsanschluss 26 in Verbindung steht und wird von dem ersten Teil 35 der ersten Fläche 36 der Einlass-Membrane 21 begrenzt.

Wie auch insbesondere **Fig. 2** zeigt, ist in der Zwischenplatte 28 ein zweiter Kanal 52 ausgebildet, welcher den Druckausgangsanschluss 25 mit einer zweiten Ringkammer 53 verbindet, welcher durch den ersten Teil 38 der zweiten Fläche 39 der Auslass-Membrane 22 begrenzt wird. Eine von der zweiten Ringkammer 53 umschlossene zweite Kammer 54 steht mit dem Druckentlastungsanschluss 24 in Verbindung und wird von dem zweiten Teil 40 der zweiten Fläche 39 der Auslass-Membrane 22 begrenzt.

Der Druckeingangsanschluss 26 und der Druckausgangsanschluss 25 sind beispielsweise parallel oder koxial, aber insbesondere voneinander weg weisend in dem ersten Gehäuseteil 19 ausgebildet. Der Druckentlastungsanschluss 24 ist beispielsweise in dem zweiten Gehäuseteil 20 ausgebildet. Dabei können die Mittelachsen des Druckeingangsanschlusses 26 und des Druckausgangsanschlusses 25 etwa senkrecht zur Mittelachse des Druckentlastungsanschlusses 24 ausgerichtet sein.

Zwischen dem ersten Gehäuseteil 19 und der Zwischenplatte 28 und dem zweiten Gehäuseteil 20 und der Zwischenplatte 28 sind jeweils vorzugsweise Dichtungen 55 angeordnet, um Steuerkammern 31, 32 und Steuerkanäle 33, 34 gegeneinander und gegenüber der Atmosphäre abzudichten.

Insbesondere ist auch ein Ventilblock 56 als Baueinheit vorgesehen, welcher das Halte-Magnetventil 15a, das Auslass-Magnetventil 15b sowie auch optional auch den elektrischen Signaleingangsanschluss 23 umfasst bzw. integriert. Der Ventilblock 56 ist beispielsweise direkt neben der Zwischenplatte 28 angeordnet und wie diese zwischen dem ersten Gehäuseteil 19 und dem zweiten Gehäuseteil 20 verspannt. Insbesondere sind hier nicht gezeigte Spannmittel vorgesehen, welche das erste Gehäuseteil 19 mit dem zweiten Gehäuseteil 20 unter Zwischenordnung der Zwischenplatte 28 und des Ventilblocks 56 zusammenspannen. Als Spannmittel können beispielsweise hier nicht dargestellte Schraubverbindungen, Schellen oder Schnapphaken verwendet werden.

Im Folgenden wird die Funktionsweise der ABS-Drucksteuerventilanordnung 7a beschrieben, wobei von einem Betriebsbremsvorgang ausgegangen wird, welcher der Fahrer durch Betätigung des Fußbremsventils 9 einleitet und dadurch in der Bremsdruckleitung 8 und auch am Druckeingangsanschluss 26 einen der Betätigung entsprechenden Bremsdruck erzeugt. Es wird dabei davon ausgegangen, dass bei dem Betriebsbremsvorgang zunächst kein Eingriff seitens der ABS-Regelung notwendig ist, so dass in diesem Ausgangszustand das Halte-Magnetventil 15a und das Auslass-Magnetventil 15b beispielsweise unbestromt sind. Das am elektrischen Signaleingangsanschluss 23 anstehende Signal ist dann beispielsweise ein "Null"-Signal, d.h. kein aktives Signal bzw. stellt keine Bestromung dar. Insbesondere können über die Signalleitung 17 und den Signaleingangsanschluss 23 das Halte-Magnetventil 15a und das Auslass-Magnetventil 15b separat und unabhängig voneinander be- und entstromt werden.

Wie aus **Fig. 2** und **Fig 3** hervorgeht, verbindet dann das unbestromte Halte-Magnetventil 15a seinen zweiten Anschluss 44, der mit der Einlass-Steuerkammer 31 verbunden ist mit seinem dritten Anschluss 45, der mit dem Druckentlastungsanschluss 24 verbunden ist und sperrt seinen ersten Anschluss 43, der mit dem Druckeingangsanschluss 26 verbunden ist. Dadurch wird die Einlass-Steuerkammer 31 entlüftet, so dass der am Druckeingangsanschluss 26 anstehende und vom Fußbremsventil 9 ausgesteuerte Bremsdruck auf den ersten Teil 35 der ersten Fläche 36 wirkend die Einlass-Membrane 21 vom ersten Membranventilsitz 29 in die erste Abhebestellung abheben lässt, wie durch den Pfeil veranschaulicht wird, wodurch der Bremsdruck durch das Einlass-Membranventil 14a durchgesteuert wird, wie der durch den Pfeil in **Fig. 2** symbolisierte Strömungsweg verdeutlicht. Die oben bereits beschriebenen Größenverhältnisse der Flächen 35, 36, 37, 41 an der Einlass-Membrane 21 erlauben diese Funktionsweise. Von dort gelangt der Bremsdruck zum Druckausgangsanschluss 25 und dann in den zugeordneten Bremszylinder 6a.

Gemäß **Fig. 3** verbindet das unbestromte Auslass-Magnetventil 15b seinen ersten, mit dem Druckeingangsanschluss 26 verbundenen Anschluss 46 mit seinem zweiten, mit der Auslass-Steuerkammer 32 verbundenen Anschluss 47 und sperrt seinen dritten Anschluss 48. Dadurch herrscht in der Auslass-Steuerkammer 32 der relativ hohe Bremsdruck, welcher dann gegen die zweite Steuerfläche 42 der Auslass-Membrane 22 wirkt und dadurch die Auslass-Membrane 22 gegen den zweiten Membran-Ventilsitz 30 dichtend drängt. Der von der zweiten Steuerfläche 42v abgewandte erste Teil 38 der zweiten Fläche 39 ist über den zweiten Kanal 52 und die zweite Ringkammer 53 ebenfalls mit dem Druckausgangsanschluss 25v verbunden, so dass auf den ersten Teil 38 der zweiten Fläche 39 ebenfalls der Bremsdruck wirkt. Jedoch ist der erste Teil 38 der zweiten Fläche 39 kleiner als die zweite Steuerfläche 42. Weiterhin vermag auch der über die zweite Kammer 54 auf den zweiten Teil 40 der zweiten Fläche 39 wirkende Atmosphärendruck dem nicht entgegenzuwirken, so dass auf die Auslass-Membrane 22 eine resultierende Kraft in Richtung des zweiten Membranventilsitzes 30 entsteht. Dann befindet sich das Auslass-Membranventil ein seiner zweiten Schließstellung, so dass keine Druckluft zum Druckentlastungsanschluss gelangen kann.

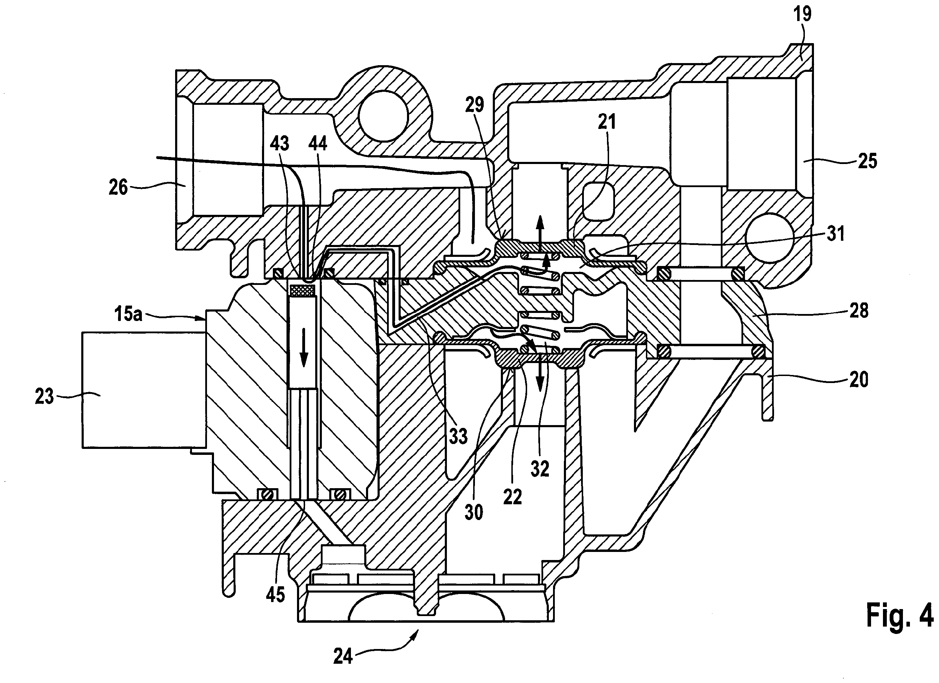

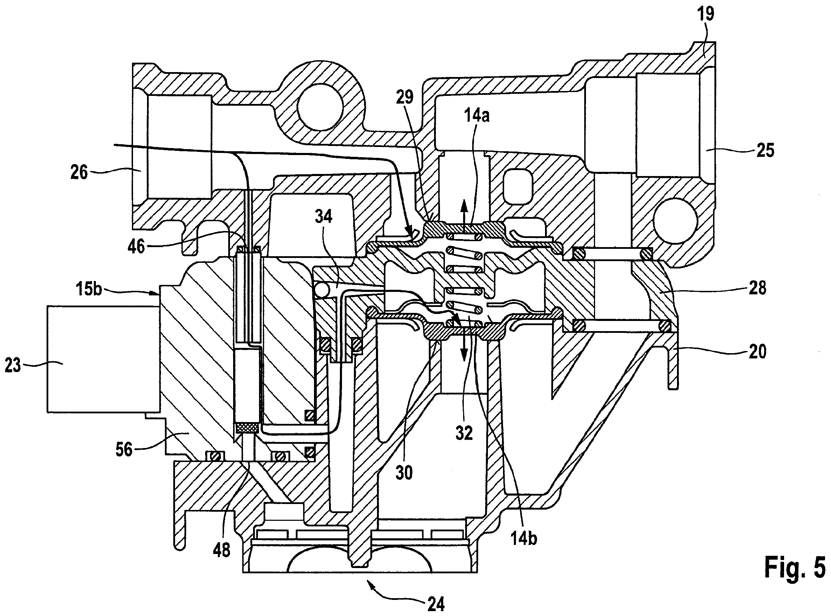

Stellt nun im Laufe des Betriebsbremsvorgangs die ABS-Regelung durch Überwachung der Raddrehzahl am Bremszylinder 6a fest, dass der Ist-Bremsschlupf an dem entsprechenden Rad eine tolerierte Abweichung in Bezug zu einem optimalem Bremsschlupf erreicht hat, so veranlasst die ABS-Regelung in der elektronischen Steuereinheit 10, dass ein den Zustand "Druckhalten" repräsentierendes Signal in den elektrischen Signaleingangsanschluss 23 eingesteuert wird. Dieser Zustand ist in **Fig. 4** und **Fig. 5** dargestellt.

Das Signal sorgt dafür, dass das Halte-Magnetventil 15a bestromt wird und verbindet daraufhin seinen ersten, mit dem Druckeingangsanschluss 26 verbundenen Anschluss 43 mit seinem zweiten, mit der Einlass-Steuerkammer 31 verbundenen Anschluss 44 und sperrt seinen dritten Anschluss 45. Dadurch wird die Einlass-Steuerkammer 31 über den ersten Steuerkanal 33 unter Bremsdruck gesetzt, was bewirkt, dass die Einlass-Membrane 21 gegen den ersten Membran-Ventilsitz 29 dichtend gedrängt und dadurch die Verbindung zwischen dem Druckeingangsanschluss 26 und dem Druckausgangsanschluss 25 unterbrochen wird, so dass der zuletzt wirkende Bremsdruck im Bremszylinder 6a "eingesperrt" wird und nicht noch weiter erhöht werden kann. Da die erste Steuerfläche 41 der Einlass-Membrane 21 größer ist als die Summe aus dem ersten und dem zweitem Teil 35, 37 der ersten Fläche 36 ist, vermögen auch die Gegenkräfte, welche ebenfalls vom Bremsdruck herrühren, nicht, dass die Einlass-Membrane 21 vom ersten Membran-Ventilsitz 29 abhebt.

Das Signal beinhaltet weiterhin, dass Auslass-Magnetventil 15b unbestromt bleibt und dann seinen ersten, mit dem Druckeingangsanschluss 26 verbundenen Anschluss 43 mit seinem zweiten, mit der Auslass-Steuerkammer 32 über den zweiten Steuerkanal 34 verbundenen Anschluss 47 verbindet und seinen dritten Anschluss 48 sperrt. Dann wird der Bremsdruck in die Auslass-Steuerkammer 32 ein- und gegen die zweite Steuerfläche 42 der Auslass-Membrane 22 gesteuert, welche daraufhin gegen den zweiten Membran-Ventilsitz 30 dichtend gedrängt wird. Dagegen können die Gegenkräfte aufgrund der Größenverhältnisse der Flächen 38, 40, 42 an der Auslass-Membrane 22 nicht ändern.

Es wird nun angenommen, dass trotz des Druckhaltens im Bremszylinder 6a weiterhin ein Ist-Bremsschlupf an dem betroffenen Rad vorliegt, welcher größer als der optimale Bremsschlupf ist. Dann veranlasst die ABS-Regelung in der elektronischen Steuereinheit 10, dass ein den Zustand "Druckabbau" repräsentierendes Signal in den elektrischen Signaleingangsanschluss 23 eingesteuert wird. Dieser Zustand ist in **Fig. 6** und **Fig. 7** dargestellt.

Dieses Signal bewirkt, dass das Halte-Magnetventil 15a bestromt wird und daraufhin seinen ersten, mit dem Druckeingangsanschluss 26 verbundenen Anschluss 43 mit seinem zweiten, über den ersten Steuerkanal 33 mit der Einlass-Steuerkammer 31 verbundenen Anschluss 44 verbindet und seinen dritten Anschluss 45 sperrt. Dadurch steht Bremsdruck in der Einlass-Steuerkammer an und wirkt auf die erste Steuerfläche 41, worauf die Einlass-Membrane 21 gegen den ersten Membran-Ventilsitz 29 dichtend gedrängt wird. Dies unterbindet eine Zufuhr von Bremsdruck zum Druckausgangsanschluss 25 und damit in den Bremszylinder 6a.

Andererseits wird auf das Signal hin auch das Auslass-Magnetventil 15b bestromt, welches daraufhin seinen zweiten, über den zweiten Steuerkanal 34 mit der Auslass-Steuerkammer 32 verbundenen Anschluss 47 mit seinem dritten, mit dem Druckentlastungsanschluss 24 verbundenen Anschluss 48 verbindet und seinen ersten Anschluss 46 sperrt. Dann wird die Auslass-Steuerkammer 32 entlüftet, was bewirkt, dass die Auslass-Membrane 22 vom zweiten Membran-Ventilsitz 30 abhebt und eine Strömungsverbindung zwischen dem Druckausgangsanschluss 25 und dem Druckentlastungsanschluss 24 geschaffen wird, wodurch der Bremszylinder 6a entlüftet wird. Das Abheben der Auslass-Membrane 22 vom zweiten Membran-Ventilsitz 30 wird von dem noch am Druckausgangsanschluss 25 wirkenden (noch hohen) Bremsdruck unterstützt, welcher über den zweiten Kanal 52 und die zweite Ringkammer 53 auf den ersten Teil 38 der zweiten Fläche 39 der Auslass-Membrane 22 wirkt.

Die oben beschriebenen Zustände "Druckaufbau", Druckhalten" und "Druckabbau" werden insbesondere durch pulsartiges Aktivieren (Bestromen)/Deaktivieren (Entstromen) der Magnetventile 15a, 15b abwechselnd hervorgerufen, bis der Ist-Bremsschlupf dem optimalen Bremsschlupf entspricht.

Es ist klar, dass die oben beschriebene ABS-Drucksteuerventilanordnung 7a nicht auf eine Verwendung in einer elektro-pneumatischen Bremseinrichtung gemäß **Fig. 1** beschränkt ist. Vielmehr kann eine solche ABS-Drucksteuerventilanordnung 7a auch in einem elektronisch bremsdruckgeregelten Bremssystem (EBS) eingesetzt werde. Dann ist die ABS-Drucksteuerventilanordnung 7a zwischen einem Druckregelmodul der EBS und einem Bremszylinder angeordnet, wobei der Ausgangsdruck des Druckregelmoduls den Arbeitsdruck bildet, welcher abhängig von elektrischen Signalen in dem Druckregelmodul in einem closed loop geregelt wird. Die ABS-Regelroutinen können dann beispielsweise in einem lokalen elektronischen Steuergerät des Druckregelmoduls implementiert sein.

Weiterhin kann die ABS-Drucksteuerventilanordnung auch Bestandteil einer hydraulischen oder elektro-hydraulischen Betriebsbremseinrichtung sein.

Im Folgenden wird ein Verfahren zur Herstellung einer oben beschriebenen ABS-Drucksteuerventilanordnung 7a gemäß einem ersten Aspekt beschrieben, welches durch wenigstens folgende aufeinander folgende Schritte gekennzeichnet ist:
a) Fertigen des ersten Gehäuseteils 19, des zweiten Gehäuseteils 20, der Zwischenplatte 28, des ersten und zweiten Federelements 16a, 16b und des Ventilblocks 56, welcher das Halte-Magnetventil 15a und das Auslass-Magnetventil 15b umfasst oder integriert, und
b) Einspannen des zweiten Gehäuseteils 20 in einer Einspannvorrichtung und Positionieren der Auslass-Membrane 22 samt zweitem Federelement 16b und des Ventilblocks 56 an dem zweiten Gehäuseteil 20,
c) Positionieren der Zwischenplatte 28 auf dem zweiten Gehäuseteil 20,
d) Positionieren der Einlass-Membrane 21 samt erstem Federelement 16a auf der Zwischenplatte 28,
e) Positionieren des ersten Gehäuseteils 19 auf der Zwischenplatte 28, und
f) Verspannen des ersten Gehäuseteils 19 mit dem zweiten Gehäuseteil 20.

Folglich befinden sich dann bezogen auf die in den **Figuren 2** bis **7** dargestellte Situation bei der Montage der ABS-Drucksteuerventilanordnung 7a das zweite eingespannte Gehäuseteil 20 unten und das erste Gehäuseteil 19 oben.

Alternativ kann das Verfahren gemäß einem zweiten Aspekt durch wenigstens folgende aufeinander folgende Schritte gekennzeichnet sein:
a) Fertigen des ersten Gehäuseteils 19, des zweiten Gehäuseteils 20, der Zwischenplatte 28, des ersten und zweiten Federelements 16a, 16b und des Ventilblocks 56, welcher das Halte-Magnetventil 15a und das Auslass-Magnetventil 15b umfasst oder integriert, und
b) Einspannen des ersten Gehäuseteils 19 in einer Einspannvorrichtung und Positionieren der Einlass-Membrane 21 samt erstem Federelement 16a und des Ventilblocks 56 an dem ersten Gehäuseteil 19,
c) Positionieren der Zwischenplatte 28 auf dem ersten Gehäuseteil 19,
d) Positionieren der Auslass-Membrane 22 samt zweitem Federelement 16b auf der Zwischenplatte 28,
e) Positionieren des zweiten Gehäuseteils 20 auf der Zwischenplatte 28, und
f) Verspannen des ersten Gehäuseteils 19 mit dem zweiten Gehäuseteil 20. Folglich befindet sich dann bezogen auf die in den **Figuren 2** bis **7** dargestellte Situation bei der Montage der ABS-Drucksteuerventilanordnung 7a das erste eingespannte Gehäuseteil 19 unten und das zweite Gehäuseteil 20 oben.

In diesen beiden Fällen wird daher die ABS-Drucksteuerventilanordnung 7a von "unten nach oben" schichtweise montiert, je nachdem mit welchem Gehäuseteil 19 oder 20 begonnen wird.

### Bezugszeichenliste

- 1: Vorderachse
- 2: Hinterachse
- 3a/b: Räder
- 4a/b: Räder
- 5a-d: Drehzahlsensoren
- 6a-d: Bremszylinder
- 7a-d: Drucksteuerventilanordnungen
- 8: Bremsdruckleitung
- 9: Fußbremsventil
- 10: Steuereinheit
- 11: ASR-Einheit
- 12: ASR-Magnetventil
- 13: Wechselventil
- 14a: Einlass-Membranventil
- 14b: Auslass-Membranventil
- 15a: Halte-Magnetventil
- 15b: Auslass-Magnetventil
- 16a: erstes Federelement
- 16b: zweites Federelement
- 17: Signalleitungen
- 18: Gehäuse
- 19: erstes Gehäuseteil
- 20: zweites Gehäuseteil
- 21: Einlass-Membrane
- 22: Auslass-Membrane
- 23: Signaleingangsanschluss
- 24: Druckentlastungsanschluss
- 25: Druckausgangsanschluss
- 26: Druckeingangsanschluss
- 28: Zwischenplatte
- 29: erster Membran-Ventilsitz
- 30: zweiter Membran-Ventilsitz
- 31: Einlass-Steuerkammer
- 32: Auslass-Steuerkammer
- 33: erster Steuerkanal
- 34: zweiter Steuerkanal
- 35: erster Teil erste Fläche
- 36: erste Fläche
- 37: zweiter Teil erste Fläche
- 38: erster Teil zweite Fläche
- 39: zweite Fläche
- 40: zweiter Teil zweite Fläche
- 41: erste Steuerfläche
- 42: zweite Steuerfläche
- 43: erster Anschluss
- 44: zweiter Anschluss
- 45: dritter Anschluss
- 46: erster Anschluss
- 47: zweiter Anschluss
- 48: dritter Anschluss
- 49: erster Kanal
- 50: erste Kammer
- 51: erste Ringkammer
- 52: zweiter Kanal
- 53: zweite Ringkammer
- 54: zweite Kammer
- 55: Dichtungen
- 56: Ventilblock

## Patentansprüche

1. ABS-Drucksteuerventilanordnung (7) zur Steuerung des Fluiddrucks in einer druckmittelbetriebenen Bremsanlage eines Fahrzeugs mit Bremsschlupfregelung, durch welche bei einer Blockierneigung einzelner Räder (3a, 3b; 4a, 4b) des Fahrzeugs der Bremsdruck in druckmittelbetriebenen Bremsaktuatoren (6a bis 6d) adaptiv angepasst wird, beinhaltend wenigstens:
a) ein Gehäuse (18), welches wenigstens zwei Gehäuseteile aufweist, nämlich ein erstes Gehäuseteil (19) und ein zweites Gehäuseteil (20),
b) zwei durch Federelemente (16a, 16b) belastete Membrane (21, 22) aufweisende Membranventile (14a, 14b), nämlich ein Einlass-Membranventil (14a) mit einer Einlass-Membrane (21) und ein Auslass-Membranventil (14b) mit einer Auslass-Membrane (22),
c) einen elektrischen Signaleingangsanschluss (23) zum Einsteuern von elektrischen Steuersignalen einer elektronischen Steuereinrichtung (10),
d) von der elektronischen Steuereinrichtung (10) ansteuerbare Magnetventile (15a, 15b) zum Vorsteuern der Membranventile (14a, 14b) mittels je eines Steuerdrucks, nämlich ein Halte-Magnetventil (15a), welches das Einlass-Membranventil (14a) durch einen ersten Vorsteuerdruck vorsteuert und ein Auslass-Magnetventil (15b), welches das Auslass-Membranventil (15b) durch einen zweiten Vorsteuerdruck vorsteuert,
e) einen Druckentlastungsanschluss (24), welcher mit einer Drucksenke in Verbindung steht,
f) einen Druckausgangsanschluss (25) zum Anschluss wenigstens eines druckmittelbetriebenen Bremsaktuators (6a bis 6d),
g) einen Druckeingangsanschluss (26) zum Anschluss einer Einrichtung (9), welche einen Bremsdruck erzeugt,
h) eine Zwischenplatte (28), welche zwischen den beiden Gehäuseteilen (19, 20) angeordnet ist, wobei
i) sich erste und zweite Federelemente (16a, 16b) einerseits an der Zwischenplatte (28) und andererseits an den Membranen (21, 22) abstützen, wobei
j) die Einlass-Membrane (21) in einer ersten Schließstellung mittels wenigstens eines ersten Federelements (16a) gegen einen ersten Membran-Ventilsitz (29) und die Auslass-Membrane (22) in einer zweiten Schließstellung mittels wenigstens eines zweiten Federelements (16b) gegen einen zweiten Membran-Ventilsitz (30) dichtend gedrängt ist,
k) die Einlass-Membrane (21) in einer ersten Abhebestellung vom ersten Membran-Ventilsitz (29) abgehoben ist, wodurch der Druckeingangsanschluss (26) mit dem Druckausgangsanschluss 259 verbunden ist, und die Auslass-Membrane (22) in einer zweiten Abhebestellung vom zweiten Membran-Ventilsitz (30) abgehoben ist, wodurch der Druckausgangsanschluss (25) mit dem Druckentlastungsanschluss (24) verbunden ist,
l) ein Außenrand der Einlass-Membrane (21) zwischen dem ersten Gehäuseteil (19) und der Zwischenplatte (28) geklemmt ist, und wobei
m) in dem ersten Gehäuseteil (19) der erste Membran-Ventilsitz (29) ausgebildet ist, **dadurch gekennzeichnet, dass**
n) ein Außenrand der Auslass-Membrane (22) zwischen dem zweiten Gehäuseteil (20) und der Zwischenplatte (28) geklemmt ist,
o) in dem zweiten Gehäuseteil (20) der zweite Membranventilsitz (30) ausgebildet ist,
p) in der Zwischenplatte (28) wenigstens ein Teil einer Einlass-Steuerkammer (31) ausgebildet ist, welche von der Einlass-Membrane (21) begrenzt ist und in welche das Halte-Magnetventil (15a) den ersten Vorsteuerdruck einsteuert,
q) in der Zwischenplatte (28) wenigstens ein Teil einer Auslass-Steuerkammer (32) ausgebildet ist, welche von der Auslass-Membrane (22) begrenzt ist und in welche das Auslass-Magnetventil (15b) den zweiten Vorsteuerdruck einsteuert, wobei
r) in der Zwischenplatte (28) wenigstens ein Teil eines ersten Steuerkanals (33) ausgebildet ist, welcher das Halte-Magnetventil (15a) mit der Einlass-Steuerkammer (31) verbindet,
s) in der Zwischenplatte (28) wenigstens ein Teil eines zweiten Steuerkanals (34) ausgebildet ist, welcher das Auslass-Magnetventil (15b) mit der Auslass-Steuerkammer (32) verbindet,
t) eine erste Bewegung der Einlass-Membrane (21) von der ersten Schließstellung in die erste Abhebestellung und eine zweite Bewegung der Auslass-Membrane (22) von der zweiten Schließstellung in die zweite Abhebestellung zueinander einander entgegen und in Richtung der Zwischenplatte (28) gerichtet sind.

2. ABS-Drucksteuerventilanordnung nach Anspruch 1, **dadurch gekennzeichnet, dass**
a) ein erster Teil (35) einer von der Einlass-Steuerkammer (31) abgewandten ersten Fläche (36) der Einlass-Membrane (21) von dem am Druckeingangsanschluss (26) herrschenden Druck und ein zweiter Teil (37) dieser ersten Fläche (36) von dem am Druckausgangsanschluss 25) herrschenden Druck belastet ist, und dass
b) ein erster Teil (38) einer von der Auslass-Steuerkammer (32) abgewandten zweiten Fläche (39) der Auslass-Membrane (22) von dem am Druckentlastungsanschluss (24) herrschenden Druck und ein zweiter Teil (40) dieser zweiten Fläche (39) von dem am Druckausgangsanschluss (25) herrschenden Druck belastet ist.

3. ABS-Drucksteuerventilanordnung nach Anspruch 2, **dadurch gekennzeichnet, dass**
a) der erste Teil (35) der ersten Fläche (36) größer als der zweite Teil (37) der ersten Fläche (36) ist, und dass
b) der erste Teil (38) der zweiten Fläche (39) größer als der zweite Teil (40) der zweiten Fläche (39) ist.

4. ABS-Drucksteuerventilanordnung nach Anspruch 3, **dadurch gekennzeichnet, dass**
a) eine zur Einlass-Steuerkammer (31) gewandte erste mit dem ersten Membranventilsitz (29) zusammen wirkenden Steuerfläche (41) der Einlass-Membrane (21) größer ist als die Summe aus dem ersten Teil (35) und dem zweiten Teil (37) der ersten Fläche (36), und dass
b) eine zur Auslass-Steuerkammer (32) gewandte zweite mit dem zweiten Membranventilsitz (30) zusammen wirkende Steuerfläche (42) der Auslass-Membrane (22) größer ist als die Summe aus dem ersten Teil (38) und dem zweiten Teil (40) der zweiten Fläche (39).

5. Drucksteuerventilanordnung nach einem der vorhergehenden Ansprüche, **dadurch gekennzeichnet, dass**
a) in der ersten Abhebestellung der Einlass-Membrane (21) der Druckeingangsanschluss (26) mit dem Druckausgangsanschluss (25) verbunden und in der der ersten Schließstellung der Einlass-Membrane (21) diese Verbindung unterbrochen ist, und dass
b) in der zweiten Abhebestellung der Auslass-Membrane (22) der Druckausgangsanschluss (25) mit dem Druckentlastungsanschluss (24) verbunden und in der der zweiten Schließstellung der Auslass-Membrane (22) diese Verbindung unterbrochen ist.

6. ABS-Drucksteuerventilanordnung nach einem der vorhergehenden Ansprüche, **dadurch gekennzeichnet, dass** die Einlass-Membrane (21) und die Auslass-Membrane (22) koaxial angeordnet sind.

7. ABS-Drucksteuerventilanordnung nach einem der vorhergehenden Ansprüche, **dadurch gekennzeichnet, dass**
a) das Halte-Magnetventil (15a) durch ein erstes 3/2-Wege-Magnetventil gebildet wird, wobei sein erster Anschluss (43) mit dem Druckeingangsanschluss (26), sein zweiter Anschluss (44) mit dem ersten Steuerkanal (33) und sein dritter Anschluss (45) mit dem Druckentlastungsanschluss (24) verbunden ist, und
b) das Auslass-Magnetventil (15b) durch ein zweites 3/2-Wege-Magnetventil gebildet wird, wobei sein erster Anschluss (46) mit dem Druckeingangsanschluss (26), sein zweiter Anschluss (47 mit dem zweiten Steuerkanal (34) und sein dritter Anschluss (48) mit dem Druckentlastungsanschluss (24) verbunden ist.

8. ABS-Drucksteuerventilanordnung nach Anspruch 7, **dadurch gekennzeichnet, dass** das Halte-Magnetventil (15a) mit dem Einlass-Membranventil (14a) und das Auslass-Magnetventil (15b) mit dem Auslass-Membranventil (14b) auf der Basis von am Signaleingangsanschluss anstehenden Steuersignalen derart zusammenwirken, dass
a) auf ein den Zustand "Druckaufbau" repräsentierendes und am Signaleingangsanschluss anstehendes Signal hin das Halte-Magnetventil (15a) seinen zweiten Anschluss (44) mit seinem dritten Anschluss (45) verbindet und seinen ersten Anschluss (43) sperrt und das Auslass-Magnetventil (15b) seinen ersten Anschluss (46) mit seinem zweiten Anschluss (47) verbindet und seinen dritten Anschluss(48) sperrt,
b) auf ein den Zustand "Druckhalten" repräsentierendes und am Signaleingangsanschluss (23) anstehendes Signal hin das Halte-Magnetventil (15a) seinen ersten Anschluss (43) mit seinem zweiten Anschluss (44) verbindet und seinen dritten Anschluss (45) sperrt und das Auslass-Magnetventil (15b) seinen ersten Anschluss (46) mit seinem zweiten Anschluss (47) verbindet und seinen dritten Anschluss (48) sperrt,
c) auf ein den Zustand "Druckabbau" repräsentierendes und am Signaleingangsanschluss (23) anstehendes Signal hin das Halte-Magnetventil (15a) seinen ersten Anschluss (43) mit seinem zweiten Anschluss (44) verbindet und seinen dritten Anschluss (45) sperrt und das Auslass-Magnetventil (15b) seinen zweiten Anschluss (47) mit seinem dritten Anschluss (48) verbindet und seinen ersten Anschluss (46) sperrt.

9. ABS-Drucksteuerventilanordnung nach einem der vorhergehenden Ansprüche, **dadurch gekennzeichnet, dass** zwischen dem ersten Gehäuseteil (19) und der Zwischenplatte (28) und dem zweiten Gehäuseteil (20) und der Zwischenplatte (28) jeweils Dichtungen angeordnet sind.

10. ABS-Drucksteuerventilanordnung nach einem der vorhergehenden Ansprüche, **dadurch gekennzeichnet, dass** ein Ventilblock (56) als Baueinheit vorgesehen ist, welcher das Halte-Magnetventil (15a) und das Auslass-Magnetventil (15b) umfasst oder integriert.

11. Druckmittelbetriebene Bremsanlage eines Fahrzeugs mit Bremsschlupfregelung, insbesondere elektro-pneumatische Bremsanlage mit Bremsschlupfregelung, umfassend wenigstens eine ABS-Drucksteuerventilanordnung (7a bis 7d) nach einem der vorhergehenden Ansprüche.

12. Bremsanlage nach Anspruch 11, **dadurch gekennzeichnet, dass** die Einrichtung, welche einen Bremsdruck erzeugt, durch ein pneumatisches Fußbremsventil (9) oder durch ein elektro-pneumatisches Druckregelmodul gebildet wird.

13. Bremsanlage nach Anspruch 11 oder 12, **dadurch gekennzeichnet, dass** die elektronische Steuereinrichtung (10) durch ein ABS-Steuergerät oder durch ein Steuergerät gebildet wird, in welchem ABS-Routinen implementiert sind.

14. Verfahren zur Herstellung einer ABS-Drucksteuerventilanordnung nach einem der Ansprüche 1 bis 10, **gekennzeichnet durch wenigstens** folgende aufeinander folgende Schritte:
a) Fertigen des ersten Gehäuseteils (19), des zweiten Gehäuseteils (20), der Zwischenplatte (28), der ersten und zweiten Federelemente (16a, 16b) und eines Ventilblocks (56), welcher das Halte-Magnetventil (15a) und das Auslass-Magnetventil (15b) umfasst oder integriert, und
b) Einspannen des zweiten Gehäuseteils (20) in einer Einspannvorrichtung und Positionieren der Auslass-Membrane (22) samt zweitem Federelement (16b) und des Ventilblocks (56) an dem zweiten Gehäuseteil (20),
c) Positionieren der Zwischenplatte (28) auf dem zweiten Gehäuseteil (20),
d) Positionieren der Einlass-Membrane (21) samt erstem Federelement (16a) auf der Zwischenplatte (28),
e) Positionieren des ersten Gehäuseteils (19) auf der Zwischenplatte (28), und
f) Verspannen des ersten Gehäuseteils (19) mit dem zweiten Gehäuseteil (20).

15. Verfahren zur Herstellung einer ABS-Drucksteuerventilanordnung nach einem der Ansprüche 1 bis 10, **gekennzeichnet durch wenigstens** folgende aufeinander folgende Schritte:
a) Fertigen des ersten Gehäuseteils (19), des zweiten Gehäuseteils (20), der Zwischenplatte (28), der ersten und zweiten Federelemente (16a, 16b) und eines Ventilblocks (56), welcher das Halte-Magnetventil (15a) und das Auslass-Magnetventil (15b) umfasst oder integriert, und
b) Einspannen des ersten Gehäuseteils (19) in einer Einspannvorrichtung und Positionieren der Einlass-Membrane (21) samt erstem Federelement (16a) und des Ventilblocks (56) an dem ersten Gehäuseteil (19),
c) Positionieren der Zwischenplatte (28) auf dem ersten Gehäuseteil (19),
d) Positionieren der Auslass-Membrane (22) samt zweitem Federelement (16b) auf der Zwischenplatte (28),
e) Positionieren des zweiten Gehäuseteils (20) auf der Zwischenplatte (28), und
f) Verspannen des ersten Gehäuseteils (19) mit dem zweiten Gehäuseteil (20).

## Claims

1. An ABS pressure control valve assembly (7) for controlling the fluid pressure in a pressure-medium-operated brake system of a vehicle with brake-slip control, by means of which the brake pressure in pressure-medium-operated brake actuators (6a to 6d) is adaptively adjusted in the event of a lockup tendency of individual wheels (3a, 3b; 4a, 4b) of the vehicle, comprising at least:
a) a housing (18) which has at least two housing parts, namely a first housing part (19) and a second housing part (20),
b) two diaphragm valves (14a, 14b) having diaphragms (21, 22) loaded by spring elements (16a, 16b), namely an inlet diaphragm valve (14a) having an inlet diaphragm (21) and an outlet diaphragm valve (14b) having an outlet diaphragm (22),
c) an electrical signal input port (23) for the inputting of electrical control signals of an electronic control device (10),
d) solenoid valves (15a, 15b), which can be activated by the electronic control device (10), for subjecting the diaphragm valves (14a, 14b) to pilot control by means of a control pressure in each case, namely a holding solenoid valve (15a), which subjects the inlet diaphragm valve (14a) to pilot control by a first pilot pressure, and an outlet solenoid valve (15b), which subjects the outlet diaphragm valve (15b) to pilot control by a second pilot pressure,
e) a pressure relief port (24), which is connected to a negative pressure source,
f) a pressure output port (25) for the connection of at least one pressure-medium-operated brake actuator (6a to 6d),
g) a pressure input port (26) for the connection of a device (9) which generates a brake pressure,
h) an intermediate plate (28) which is arranged between the two housing parts (19, 20), wherein
i) first and second spring elements (16a, 16b) are supported on the one hand on the intermediate plate (28) and on the other hand on the diaphragms (21, 22), wherein
j) in a first closed position the inlet diaphragm (21) is urged in a sealing manner against a first diaphragm valve seat (29) by means of at least a first spring element (16a), and in a second closed position the outlet diaphragm (22) is urged in a sealing manner against a second diaphragm valve seat (30) by means of at least a second spring element (16b),
k) in a first lifted position the inlet diaphragm (21) is lifted from the first diaphragm valve seat (29), whereby the pressure input port (26) is connected to the pressure output port 259, and in a second lifted position the outlet diaphragm (22) is lifted from the second diaphragm valve seat (30), whereby the pressure output port (25) is connected to the pressure relief port (24),
l) an outer edge of the inlet diaphragm (21) is clamped between the first housing part (19) and the intermediate plate (28), and wherein
m) the first diaphragm valve seat (29) is formed in the first housing part (19), **characterized in that**
n) an outer edge of the outlet diaphragm (22) is clamped between the second housing part (20) and the intermediate plate (28),
o) the second diaphragm valve seat (30) is formed in the second housing part (20),
p) there is formed in the intermediate plate (28) at least a portion of an inlet control chamber (31) which is delimited by the inlet diaphragm (21) and to which the holding solenoid valve (15a) applies the first pilot pressure,
q) there is formed in the intermediate plate (28) at least a portion of an outlet control chamber (32) which is delimited by the outlet diaphragm (22) and to which the outlet solenoid valve (15b) applies the second pilot pressure, wherein
r) there is formed in the intermediate plate (28) at least a portion of a first control channel (33) which connects the holding solenoid valve (15a) to the inlet control chamber (31),
s) there is formed in the intermediate plate (28) at least a portion of a second control channel (34) which connects the outlet solenoid valve (15b) to the outlet control chamber (32),
t) a first movement of the inlet diaphragm (21) from the first closed position into the first lifted position and a second movement of the outlet diaphragm (22) from the second closed position into the second lifted position are directed opposite to one another and in the direction towards the intermediate plate (28).

2. The ABS pressure control valve assembly as claimed in claim 1, **characterized in that**
a) a first portion (35) of a first face (36), remote from the inlet control chamber (31), of the inlet diaphragm (21) is subjected to the pressure prevailing at the pressure input port (26), and a second portion (37) of this first face (36) is subjected to the pressure prevailing at the pressure output port (25), and **in that**
b) a first portion (38) of a second face (39), remote from the outlet control chamber (32), of the outlet diaphragm (22) is subjected to the pressure prevailing at the pressure relief port (24), and a second portion (40) of this second face (39) is subjected to the pressure prevailing at the pressure output port (25).

3. The ABS pressure control valve assembly as claimed in claim 2, **characterized in that**
a) the first portion (35) of the first face (36) is larger than the second portion (37) of the first face (36), and **in that**
b) the first portion (38) of the second face (39) is larger than the second portion (40) of the second face (39).

4. The ABS pressure control valve assembly as claimed in claim 3, **characterized in that**
a) a first control face (41), facing the inlet control chamber (31) and cooperating with the first diaphragm valve seat (29), of the inlet diaphragm (21) is larger than the sum of the first portion (35) and the second portion (37) of the first face (36), and **in that**
b) a second control face (42), facing the outlet control chamber (32) and cooperating with the second diaphragm valve seat (30), of the outlet diaphragm (22) is larger than the sum of the first portion (38) and the second portion (40) of the second face (39).

5. The pressure control valve assembly as claimed in one of the preceding claims, **characterized in that**
a) in the first lifted position of the inlet diaphragm (21) the pressure input port (26) is connected to the pressure output port (25), and in the first closed position of the inlet diaphragm (21) this connection is broken, and **in that**
b) in the second lifted position of the outlet diaphragm (22) the pressure output port (25) is connected to the pressure relief port (24), and in the second closed position of the outlet diaphragm (22) this connection is broken.

6. The ABS pressure control valve assembly as claimed in one of the preceding claims, **characterized in that** the inlet diaphragm (21) and the outlet diaphragm (22) are arranged coaxially.

7. The ABS pressure control valve assembly as claimed in one of the preceding claims, **characterized in that**
a) the holding solenoid valve (15a) is formed by a first 3/2-way solenoid valve, wherein its first port (43) is connected to the pressure input port (26), its second port (44) is connected to the first control channel (33), and its third port (45) is connected to the pressure relief port (24), and
b) the outlet solenoid valve (15b) is formed by a second 3/2-way solenoid valve, wherein its first port (46) is connected to the pressure input port (26), its second port (47) is connected to the second control channel (34), and its third port (48) is connected to the pressure relief port (24).

8. The ABS pressure control valve assembly as claimed in claim 7, **characterized in that** the holding solenoid valve (15a) cooperates with the inlet diaphragm valve (14a) and the outlet solenoid valve (15b) cooperates with the outlet diaphragm valve (14b), on the basis of control signals present at the signal input port, such that
a) in response to a signal representing the "pressure buildup" state and present at the signal input port, the holding solenoid valve (15a) connects its second port (44) to its third port (45) and blocks its first port (43), and the outlet solenoid valve (15b) connects its first port (46) to its second port (47) and blocks its third port (48),
b) in response to a signal representing the "pressure hold" state and present at the signal input port (23), the holding solenoid valve (15a) connects its first port (43) to its second port (44) and blocks its third port (45), and the outlet solenoid valve (15b) connects its first port (46) to its second port (47) and blocks its third port (48),
c) in response to a signal representing the "pressure reduction" state and present at the signal input port (23), the holding solenoid valve (15a) connects its first port (43) to its second port (44) and blocks its third port (45), and the outlet solenoid valve (15b) connects its second port (47) to its third port (48) and blocks its first port (46).

9. The ABS pressure control valve assembly as claimed in one of the preceding claims, **characterized in that** seals are arranged between the first housing part (19) and the intermediate plate (28) and between the second housing part (20) and the intermediate plate (28).

10. The ABS pressure control valve assembly as claimed in one of the preceding claims, **characterized in that** there is provided a valve block (56) in the form of a structural unit, which comprises or integrates the holding solenoid valve (15a) and the outlet solenoid valve (15b).

11. A pressure-medium-operated brake system of a vehicle with brake-slip control, in particular electropneumatic brake system with brake-slip control, comprising at least one ABS pressure control valve assembly (7a to 7d) as claimed in one of the preceding claims.

12. The brake system as claimed in claim 11, **characterized in that** the device which generates a brake pressure is formed by a pneumatic foot-brake valve (9) or by an electropneumatic pressure control module.

13. The brake system as claimed in claim 11 or 12, **characterized in that** the electronic control device (10) is formed by an ABS controller or by a controller in which ABS routines are implemented.

14. A method for producing an ABS pressure control valve assembly as claimed in one of claims 1 to 10, **characterized by at least** the following successive steps:
a) manufacturing the first housing part (19), the second housing part (20), the intermediate plate (28), the first and second spring elements (16a, 16b), and a valve block (56) which comprises or integrates the holding solenoid valve (15a) and the outlet solenoid valve (15b), and
b) clamping the second housing part (20) in a clamping device and positioning the outlet diaphragm (22), together with the second spring element (16b), and the valve block (56) on the second housing part (20),
c) positioning the intermediate plate (28) on the second housing part (20),
d) positioning the inlet diaphragm (21), together with the first spring element (16a), on the intermediate plate (28),
e) positioning the first housing part (19) on the intermediate plate (28), and
f) clamping the first housing part (19) to the second housing part (20).

15. A method for producing an ABS pressure control valve assembly as claimed in one of claims 1 to 10, **characterized by at least** the following successive steps:
a) manufacturing the first housing part (19), the second housing part (20), the intermediate plate (28), the first and second spring elements (16a, 16b), and a valve block (56) which comprises or integrates the holding solenoid valve (15a) and the outlet solenoid valve (15b), and
b) clamping the first housing part (19) in a clamping device and positioning the inlet diaphragm (21), together with the first spring element (16a), and the valve block (56) on the first housing part (19),
c) positioning the intermediate plate (28) on the first housing part (19),
d) positioning the outlet diaphragm (22), together with the second spring element (16b), on the intermediate plate (28),
e) positioning the second housing part (20) on the intermediate plate (28), and
f) clamping the first housing part (19) to the second housing part (20).

## Revendications

1. Dispositif (7) de commande de pression pour l'ABS pour la commande de la pression de fluide dans une installation de frein fonctionnant par du fluide sous pression d'un véhicule ayant une régulation du glissement de freinage, par laquelle, si diverses roues (3a, 3b ; 4a, 4b) du véhicule ont tendance à se bloquer, on adapte adaptativement la pression de frein dans des actionneurs (6a à 6d) de frein fonctionnant par du fluide sous pression, comportant au moins :
a) une enveloppe (18), qui a au moins deux parties d'enveloppe, à savoir une première partie (19) d'enveloppe et une deuxième partie (20) d'enveloppe,
b) deux vannes (14a, 14b) à membrane ayant des membranes (21, 22) soumises à des éléments (16a, 16b) de ressort, à savoir une vanne (14a) à membrane d'entrée ayant une membrane (21) d'entrée et une vanne (14b) à membrane de sortie ayant une membrane (22) de sortie,
c) une borne (23) électrique d'entrée de signal pour l'entrée de signaux électriques de commande d'un dispositif (10) électronique de commande,
d) des électrovannes (15a, 15b) pouvant être commandées par le dispositif (10) électronique de commande pour le pilotage des vannes (14a, 14b) à membrane, au moyen de respectivement une pression de commande, à savoir une électrovanne (15a) de maintien, qui pilote la vanne (14a) à membrane d'entrée par une première pression pilote et une électrovanne (15b) de sortie, qui pilote la vanne (15b) à membrane de sortie par une deuxième pression pilote,
e) un raccord (24) de détente de la pression, qui communique avec un puits de pression,
f) un raccord (25) de sortie de la pression pour le raccordement d'au moins un actionneur (6a à 6d) de frein fonctionnant par fluide sous pression,
g) un raccord (26) d'entrée de la pression pour le raccordement d'un dispositif (9), qui produit une pression de frein,
h) une plaque (28) intermédiaire, qui est disposée entre les deux parties (19, 20) d'enveloppe, dans lequel
i) un premier et un deuxième éléments (16a, 16b) de ressort s'appuyant d'une part sur la plaque (28) intermédiaire et d'autre part sur les membranes (21, 22), dans lequel
j) la membrane (21) d'entrée est repoussée avec étanchéité, dans une première position de fermeture au moyen d'au moins un premier élément (16a) de ressort, sur un premier siège (29) de vanne à membrane et la membrane (22) de sortie, dans une deuxième position de fermeture au moyen d'au moins un deuxième élément (16b) de ressort, sur un deuxième siège (30) de vanne à membrane,
k) la membrane (21) d'entrée est, dans un première position de soulèvement, soulevée du premier siège (29) de vanne à membrane, grâce à quoi le raccord (26) d'entrée de la pression communique avec le raccord 259 de sortie de la pression, et la membrane (22) de sortie est, dans une deuxième position de soulèvement, soulevée du deuxième siège (30) de vanne à membrane, grâce à quoi le raccord (25) de sortie de la pression communique avec le raccord (24) de détente de la pression,
l) un bord extérieur de la membrane (21) d'entrée est serré entre la première partie (19) et la plaque (28) intermédiaire, et dans lequel
m) le premier siège (29) de vanne à membrane est constitué dans la première partie (19) de l'enveloppe, **caractérisé en ce que**
n) un bord extérieur de la membrane (22) de sortie est serré entre la deuxième partie (20) de l'enveloppe et la plaque (28) intermédiaire,
o) le deuxième siège (30) de vanne à membrane est constitué dans la deuxième partie (20) de l'enveloppe,
p) il est constitué, dans la plaque (28) intermédiaire, au moins une partie d'une chambre (31) de commande d'entrée, qui est délimitée par la membrane (21) d'entrée et dans laquelle l'électrovanne (15a) de maintien commande la première pression pilote,
q) il est constitué, dans la plaque (28) intermédiaire, au moins une partie d'une chambre (32) de commande de sortie, qui est délimitée par la membrane (22) de sortie et dans laquelle l'électrovanne (15b) de sortie commande la deuxième pression pilote, dans lequel
r) il est constitué, dans la plaque (28) intermédiaire, au moins une partie d'un premier conduit (33) de commande, qui met l'électrovanne (15a) de maintien en communication avec la chambre (31) de commande d'entrée,
s) il est constitué, dans la plaque (28) intermédiaire, au moins une partie d'un deuxième conduit (34) de commande, qui met l'électrovanne (15b) de sortie en communication avec la chambre (32) de commande de sortie,
t) un premier déplacement de la membrane (21) d'entrée de la première position de fermeture à la première position de soulèvement et un deuxième déplacement de la membrane (22) de sortie de la deuxième position de fermeture à la deuxième position de soulèvement sont dirigés de manière opposés l'un à l'autre et dans la direction de la plaque (28) intermédiaire.

2. Dispositif de vanne de commande de la pression pour l'ABS suivant la revendication 1, **caractérisé en ce que**
a) une première partie (35) d'une première surface (36), non tournée vers la chambre (31) de commande d'entrée, de la membrane (21) d'entrée est soumise à la pression régnant dans le raccord (26) d'entrée de la pression et une deuxième partie (37) de cette première surface (36) est soumise à la pression régnant dans le raccord (25) de sortie de la pression, et **en ce que**
b) une première partie (38) d'une deuxième surface (39), non tournée vers la chambre (32) de commande de sortie, de la membrane (22) de sortie, est soumise à la pression régnant dans le raccord (24) de détente de la pression et une deuxième partie (40) de cette deuxième surface (39) est soumise à la pression régnant dans le raccord (25) de sortie de la pression.

3. Dispositif de vanne de commande de la pression pour l'ABS suivant la revendication 2, **caractérisé en ce que**
a) la première partie (35) de la première surface (36) est plus grande que la deuxième partie (37) de la première surface (36), et **en ce que**
b) la première partie (38) de la deuxième surface (39) est plus grande que la deuxième partie (40) de la deuxième surface (39) .

4. Dispositif de vanne de commande de la pression pour l'ABS suivant la revendication 3, **caractérisé en ce que**
a) une première surface (41) de commande, tournée vers la chambre (31) de commande d'entrée et coopérant avec le premier siège (29) de vanne à membrane, de la membrane (21) d'entrée est plus grande que la somme de la première partie (35) et de la deuxième partie (37) de la première surface (36), et **en ce que**
b) une deuxième surface (42) de commande, tournée vers la chambre (32) de commande de sortie et coopérant avec le deuxième siège (30) de vanne à membrane, de la membrane (22) de sortie est plus grande que la somme de la première partie (38) et de la deuxième partie (40) de la deuxième surface (39) .

5. Dispositif de vanne de commande de la pression pour l'ABS suivant l'une des revendications précédentes, **caractérisé en ce que**
a) dans la première position de soulèvement de la membrane (21) d'entrée, le raccord (26) d'entrée de la pression communique avec le raccord (25) de sortie de la pression et, dans la première position de fermeture de la membrane (21) d'entrée, cette communication est interrompue, et **en ce que**
b) dans la deuxième position de soulèvement de la membrane (22) de sortie, le raccord (25) de sortie de la pression communique avec le raccord (24) de détente de la pression et, dans la deuxième position de fermeture de la membrane (22) de sortie, cette communication est interrompue.

6. Dispositif de vanne de commande de la pression pour l'ABS suivant l'une des revendications précédentes, **caractérisé en ce que** la membrane (21) d'entrée et la membrane (22) de sortie sont disposées coaxialement.

7. Dispositif de vanne de commande de la pression pour l'ABS suivant l'une des revendications précédentes, **caractérisé en ce que**
a) l'électrovanne (15a) de maintien est formée par une première électrovanne à 3/2 voies, dans laquelle son premier raccord (43) communique avec le raccord (26) d'entrée de la pression, son deuxième raccord (44) avec le premier conduit (33) de commande et son troisième raccord (45) avec le raccord (24) de détente de la pression, et
b) l'électrovanne (15b) de sortie est formée par une deuxième électrovanne à 3/2 voies, dans laquelle son premier raccord (46) communique avec le raccord (26) d'entrée de la pression, son deuxième raccord (47) avec le deuxième conduit (34) de commande et son troisième raccord (48) avec le raccord (24) de détente de la pression.

8. Dispositif de vanne de commande de la pression pour l'ABS suivant la revendication 7, **caractérisé en ce que** l'électrovanne (15a) de maintien coopère avec la vanne (14a) à membrane d'entrée et l'électrovanne (15b) de sortie avec la vanne (14b) à membrane de sortie sur la base de signaux de commande appliqués à la borne d'entrée de signal, de manière à ce que
a) sur un signal représentant l'état « établissement de la pression » et s'appliquant à la borne d'entrée de signal, l'électrovanne (15a) de maintien met son deuxième raccord (44) en communication avec son troisième raccord (45) et ferme son premier raccord (43) et l'électrovanne (15b) de sortie met son premier raccord (46) en communication avec son deuxième raccord (47) et ferme son troisième raccord (48),
b) sur un signal représentant l'état « maintien de la pression » et s'appliquant à la borne (23) d'entrée de signal, l'électrovanne (15a) de maintien met son premier raccord (43) en communication avec son deuxième raccord (44) et ferme son troisième raccord (45) et l'électrovanne (15b) de sortie met son premier raccord (46) en communication avec son deuxième raccord (47) et ferme son troisième raccord (48),
c) sur un signal représentant l'état « suppression de la pression » et s'appliquant à la borne (23) d'entrée de signal, l'électrovanne (15a) de maintien met son premier raccord (43) en communication avec son deuxième raccord (44) et ferme son troisième raccord (45) et l'électrovanne (15b) de sortie met son deuxième raccord (47) en communication avec son troisième raccord (48) et ferme son premier raccord (46) .

9. Dispositif de vanne de commande de la pression pour l'ABS suivant l'une des revendications précédentes, **caractérisé en ce que** respectivement des garnitures d'étanchéité sont disposées entre la première partie (19) de l'enveloppe et la plaque (28) intermédiaire et la deuxième partie (20) de l'enveloppe et la plaque (28) intermédiaire.

10. Dispositif de vanne de commande de la pression pour l'ABS suivant l'une des revendications précédentes, **caractérisé en ce qu'un** bloc (56) de vanne est prévu comme unité de construction, qui comprend ou intègre l'électrovanne (15a) de maintien et l'électrovanne (15b) de sortie.

11. Installation de frein, fonctionnant par un fluide sous pression, d'un véhicule comprenant une régulation de glissement de frein, notamment installation électropneumatique de frein ayant une régulation du glissement de frein, comprenant au moins un agencement (7a à 7d) de vanne de commande de pression pour l'ABS suivant l'une des revendications précédentes.

12. Installation de frein suivant la revendication 11, **caractérisée en ce que** le dispositif, qui produit une pression de frein est formé par une vanne (9) pneumatique de frein au pied ou par un module de réglage électropneumatique de régulation de la pression.

13. Installation de frein suivant la revendication 11 ou 12, **caractérisée en ce que** le dispositif (10) électronique de commande est formé par un appareil de commande ABS ou par un appareil de commande, dans lequel des programmes ABS sont mis en œuvre.

14. Procédé de fabrication d'un dispositif de vanne de commande de pression pour l'ABS suivant l'une des revendications 1 à 10, **caractérisé par** au moins les stades successifs suivants
a) fabrication de la première partie (19) de l'enveloppe, de la deuxième partie (20) de l'enveloppe, de la plaque (28) intermédiaire, de premier et deuxième éléments (16a, 16b) de ressort et d'un bloc (56) de vanne, qui comprend ou intègre l'électrovanne (15a) de maintien et l'électrovanne (15b) de sortie, et
b) serrage de la deuxième partie (20) de l'enveloppe dans un système de serrage et mise en position de la membrane (22) de sortie ensemble avec le deuxième élément (16b) de ressort et le bloc (56) de vanne sur la deuxième partie (20) de l'enveloppe,
c) mise en position de la plaque (28) intermédiaire sur la deuxième partie (20) de l'enveloppe,
d) mise en position de la membrane (21) d'entrée ensemble avec le premier élément (16a) de ressort sur la plaque (28) intermédiaire,
e) mise en position de la première partie (19) de l'enveloppe sur la plaque (28) intermédiaire,
f) serrage de la première partie (19) de l'enveloppe avec la deuxième partie (20) de l'enveloppe.

15. Procédé de fabrication d'un dispositif de vanne de commande de pression pour l'ABS suivant l'une des revendications 1 à 10, **caractérisé par** au moins les stades successifs suivants :
a) fabrication de la première partie (19) de l'enveloppe, de la deuxième partie (20) de l'enveloppe, de la plaque (28) intermédiaire, de premier et deuxième éléments (16a, 16b) de ressort et d'un bloc (56) de vanne, qui comprend ou intègre l'électrovanne (15a) de maintien et l'électrovanne (15b) de sortie, et
b) serrage de la première partie (19) de l'enveloppe dans un système de serrage et mise en position de la membrane (21) d'entrée ensemble avec le premier élément (16a) de ressort et le bloc (56) de vanne sur la première partie (19) de l'enveloppe,
c) mise en position de la plaque (28) intermédiaire sur la première partie (19) de l'enveloppe,
d) mise en position de la membrane (22) de sortie ensemble avec le deuxième élément (16b) de ressort sur la plaque (28) intermédiaire,
e) mise en position de la deuxième partie (20) de l'enveloppe sur la plaque (28) intermédiaire,
f) serrage de la première partie (19) de l'enveloppe avec la deuxième partie (20) de l'enveloppe.
